# EUROPEAN PATENT APPLICATION

(11) **EP 4 542 826 A1**
(43) Date of publication of application: **23.04.2025**
(21) Application number: 23826921.1
(22) Date of filing: 30.05.2023
(51) Int. Cl.: H02J 50/80, H02J 7/00, H02J 50/10, H02J 50/12, H02J 50/60, H02J 50/90

(54) **CHARGING DEVICE**

(30) Priority: 20.06.2022 JP 2022098973; 01.03.2023 JP 2023030764
(71) Applicant: Panasonic Automotive Systems Co., Ltd., Yokohama-shi, Kanagawa 224-8520 (JP)
(72) Inventor: SOMA, Osamu, Yokohama-shi, Kanagawa 224-8520 (JP)
(74) Representative: Eisenführ Speiser
(86) International application number: PCT/JP2023/020129
(87) International publication number: WO 2023/248733

(57) **Abstract**

A charging device that performs noncontact charging on a power receiver coil of a terminal device includes a power transmitter coil that transmits electric power to the terminal device, a power transmission instruction unit that causes the power transmitter coil to transmit electric power, a transmitted power acquisition unit that acquires magnitude of transmitted power that the power transmission instruction unit causes to be transmitted, a received power acquisition unit that acquires magnitude of received power received by the power receiver coil, an arithmetic operation unit that calculates a ratio of the received power to the transmitted power, and a charging state control unit that limits the transmitted power in a case where the ratio is smaller than a threshold.

## Description

### TECHNICAL FIELD

The present disclosure relates to a charging device.

### BACKGROUND ART

Recently, there has been known a charging device that performs noncontact charging on a terminal device such as a smartphone. In such a charging device, an induced electromotive force by electromagnetic induction is generated by causing a magnetic flux generated by an alternating current fed to a power transmitter coil to pass through a power receiver coil incorporated in a terminal device placed on a charging stand. Then, the terminal device is charged by the induced electromotive force generated in the power receiver coil.

In such a charging device, in the case where a difference value between transmitted power on a charger side and received power on a receiver side has exceeded a predetermined threshold, it is determined that a foreign object is present between the charger and the receiver, and the transmitted power is cut off or limited (for example, Patent Literature 1).

There has also been known a charging device that determines that a position of a receiver has deviated when communication of received power from the receiver side has been interrupted and corrects the position of the receiver (for example, Patent Literature 2).

### CITATION LIST

### Patent Literature

Patent Literature 1: US Patent No. 8039995
Patent Literature 2: WO 2012/173128 A

### SUMMARY OF INVENTION

In the charging device disclosed in Patent Literature 1, there is a problem in that it cannot be distinguished whether a power loss calculated from a relation between the transmitted power and the received power is due to a foreign object or due to positional misalignment of the receiver.

In the charging device disclosed in Patent Literature 2, there is a problem that positional misalignment of the receiver cannot be determined in a region where the communication of the received power is not interrupted. Furthermore, in the case where a region where the communication of the received power is interrupted is present further on the outer side than a foreign object detection range, there is a problem in that the transmitted power is cut off because foreign object detection works before positional misalignment of the receiver is detected.

An object of the present disclosure is to provide a charging device capable of continuing charging as much as possible even if positional misalignment between a power transmitter coil and a power receiver coil or insertion of a foreign object between the power transmitter coil and the power receiver coil occurs.

A charging device according to the present disclosure is a charging device in which a terminal device including a power receiver coil that receives wirelessly transmitted power is placed on a charging stand to perform noncontact charging, the charging device including: a power transmitter coil that transmits electric power to the terminal device; a power transmission instruction unit that causes the power transmitter coil to transmit electric power; a transmitted power acquisition unit that acquires magnitude of transmitted power that the power transmission instruction unit causes to be transmitted; a received power acquisition unit that acquires magnitude of received power received by the power receiver coil; an arithmetic operation unit that calculates a ratio of the received power to the transmitted power; and a charging state control unit that limits the transmitted power in a case where the ratio is smaller than a threshold.

### EFFECT OF THE INVENTION

With the charging device according to the present disclosure, even if positional misalignment between the power transmitter coil and the power receiver coil or insertion of a foreign object between the power transmitter coil and the power receiver coil occurs, charging can be continued as much as possible.

### BRIEF DESCRIPTION OF THE DRAWINGS

FIG. 1 is a block diagram illustrating an example of a schematic configuration of a charging device in an embodiment;
FIG. 2 is a diagram illustrating an example of a schematic structure of a charging stand;
FIG. 3A is a diagram illustrating an example of a power transmission state in the case where a foreign object is present between a power transmitter coil and a power receiver coil;
FIG. 3B is a diagram illustrating an example of a power transmission state in the case where positional misalignment occurs between the power transmitter coil and the power receiver coil;
FIG. 4 is a functional block diagram illustrating an example of a functional configuration of a control unit included in the charging device in the embodiment;
FIG. 5 is a diagram illustrating an example of an operation of the charging device in the case where positional misalignment of the power receiver coil occurs;
FIG. 6A is a diagram illustrating an example of a positional relation between the power receiver coil and the power transmitter coil at time t7 in FIG. 5;
FIG. 6B is a diagram illustrating an example of a state in which the charging device moves the position of the power transmitter coil from time t8 to time t13 in FIG. 5;
FIG. 7 is a flowchart illustrating an example of a flow of processing performed by the charging device in the embodiment;
FIG. 8 is a diagram illustrating an example of an operation of the charging device in the case where a metal foreign object is inserted between the power receiver coil and the power transmitter coil;
FIG. 9A is a diagram illustrating an example of a positional relation between the power receiver coil and the power transmitter coil at time t4 in FIG. 8;
FIG. 9B is a diagram illustrating an example of a state in which the charging device moves the position of the power transmitter coil from time t5 to time t10 in FIG. 5;
FIG. 10 is a diagram illustrating an example of an operation of the charging device in the case where a metal foreign object is present from the beginning between the power receiver coil and the power transmitter coil;
FIG. 11 is a diagram illustrating an example of an operation of the charging device for continuing charging even in the case where efficiency of the power receiver coil is originally poor;
FIG. 12 is a diagram illustrating an example of an operation of the charging device in the case where a user moves the position of the terminal device during charging;
FIG. 13 is a flowchart illustrating an example of an operation in a first modification of the charging device in the embodiment;
FIG. 14 is a flowchart illustrating an example of an operation in a second modification of the charging device in the embodiment; and
FIG. 15 is a flowchart illustrating an example of an operation in a third modification of the charging device in the embodiment.

### DESCRIPTION OF EMBODIMENTS

### (Embodiment)

An embodiment of a charging device according to the present disclosure is explained below with reference to the drawings.

### (Schematic configuration of a charging device)

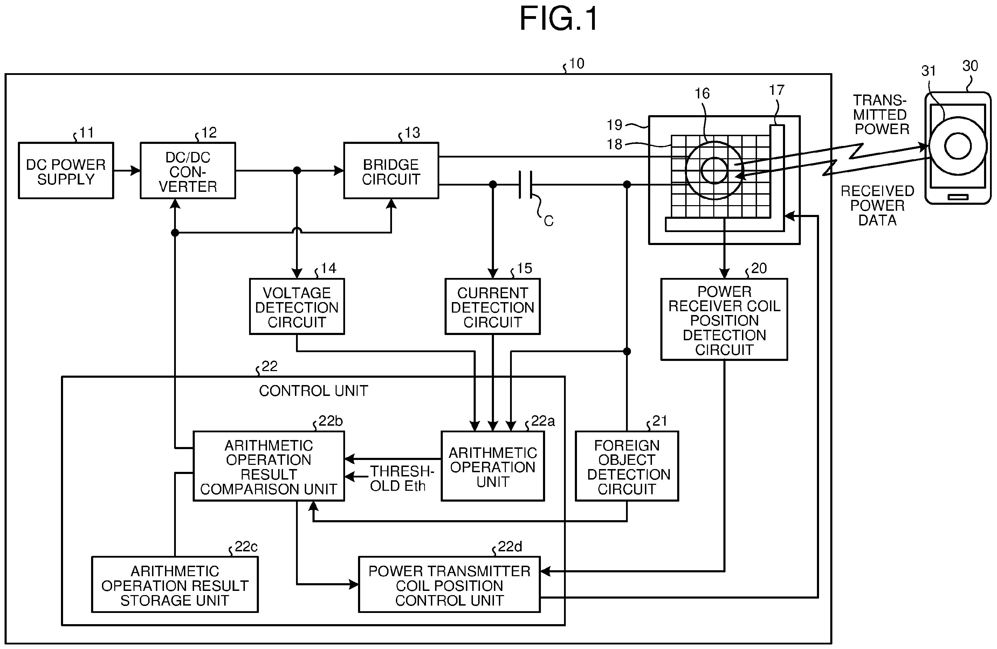

A schematic configuration of a charging device 10 is explained with reference to FIG. 1. FIG. 1 is a block diagram illustrating an example of a schematic configuration of the charging device according to the embodiment.

The charging device 10 performs noncontact charging (hereinafter simply referred to as charging) on a terminal device 30. The terminal device 30 is, for example, a smartphone. The charging device 10 includes a DC power supply 11, a DC-DC converter 12, a bridge circuit 13, a voltage detection circuit 14, a current detection circuit 15, a power transmitter coil 16, a moving mechanism 17, a position detection controller 18, a power receiver coil position detection circuit 20, a foreign object detection circuit 21, and a control unit 22.

The DC power supply 11 supplies DC power for causing the charging device 10 to operate.

The DC-DC converter 12 boosts or steps down a DC voltage of the DC power supply 11 to a predetermined DC voltage.

The bridge circuit 13 converts the DC voltage boosted or stepped down by the DC-DC converter 12 into an AC voltage. Note that the bridge circuit 13 may be a full bridge circuit or may be a half bridge circuit.

The voltage detection circuit 14 detects the DC voltage boosted or stepped down by the DC-DC converter 12.

The current detection circuit 15 detects an output current of the bridge circuit 13.

The power transmitter coil 16 generates a magnetic flux according to the principle of electromagnetic induction according to the AC voltage applied from the bridge circuit 13. The generated magnetic flux passes through a power receiver coil 31 included in the terminal device 30 placed to overlap the power transmitter coil 16 to thereby generate induced electromotive force in the power receiver coil 31. A built-in battery of the terminal device 30 is charged by the induced electromotive force generated at this time. That is, electric power is transmitted from the power transmitter coil 16 to the power receiver coil 31. Communication based on the Qi standard is performed from the power receiver coil 31 to the power transmitter coil 16 and, for example, an amount of power received by the power receiver coil 31 is transmitted.

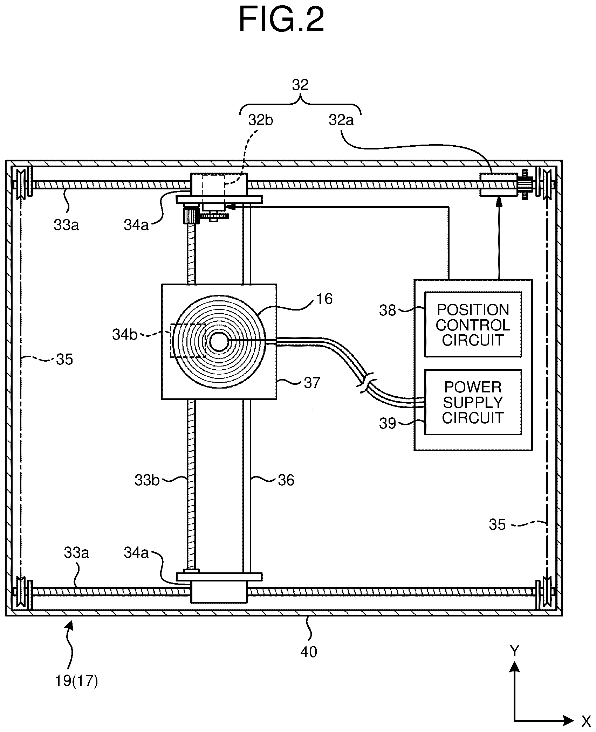

The moving mechanism 17 moves the position of the power transmitter coil 16 within a two-dimensional coordinate including a coil surface. The structure of the moving mechanism 17 is explained in detail below (see FIG. 2). That is, the position of the power transmitter coil 16 can be changed by the moving mechanism 17. For that reason, in the following explanation, the power transmitter coil 16 is sometimes referred to as movable coil.

The position detection controller 18 includes a plurality of pattern coils and detects the reflected wave that varies according to a coupling state of the plurality of pattern coils and the power receiver coil 31 in response to a pulse output from a not-illustrated pulse output circuit connected to the pattern coils, using the power receiver coil position detection circuit 20.

Note that the power transmitter coil 16, the moving mechanism 17, and the position detection controller 18 are included in a charging stand 19. The upper surface of the charging stand 19 forms a plane on which the terminal device 30 can be placed.

The power receiver coil position detection circuit 20 acquires the reflected wave from position detection controller 18 and detects the center position of the power receiver coil 31.

The foreign object detection circuit 21 detects whether there is a metal foreign object at a position overlapping the power transmitter coil 16 when the charging device 10 is not performing charging. More specifically, when the bridge circuit 13 applies an AC voltage to the power transmitter coil 16 while changing a frequency, the foreign object detection circuit 21 calculates sharpness (a Q value) of a series resonance state due to a capacitance component (capacitance) of a capacitor C connected in series between the bridge circuit 13 and the power transmitter coil 16 and a resistance component (inductance) of the power transmitter coil 16. Then, by detecting that the calculated Q value is lower than a predicted Q value, the foreign object detection circuit 21 determines that a metal foreign object is present between the power transmitter coil 16 and the power receiver coil 31. Note that a more detailed detection method is disclosed in, for example, Patent Literature 2.

The control unit 22 performs various kinds of control relating to a charging state by the charging device 10.

The control unit 22 includes an arithmetic operation unit 22a, an arithmetic operation result comparison unit 22b, an arithmetic operation result storage unit 22c, and a power transmitter coil position control unit 22d.

The arithmetic operation unit 22a calculates transmitted power to the power transmitter coil 16 from a voltage detected by the voltage detection circuit 14 and an electric current detected by the current detection circuit 15.

The arithmetic operation unit 22a calculates received power of the power receiver coil 31 based on communication data received from the power transmitter coil 16 by the power receiver coil 31.

Furthermore, the arithmetic operation unit 22a calculates the ratio of the received power Rp(t) to the transmitted power Pout(t) calculated at the same time t, that is, the efficiency E(t) (=Rp(t)/Pout(t)). Note that the arithmetic operation unit 22a may calculate the difference value between the transmitted power Pout(t) and the received power Rp(t) (Pout(t)-Rp(t)) calculated at the same time t.

The arithmetic operation result comparison unit 22b compares calculated efficiency E(t) and a preset threshold Eth. The arithmetic operation result comparison unit 22b instructs the DC-DC converter 12 and the bridge circuit 13 to start and end charging. The arithmetic operation result comparison unit 22b instructs the DC-DC converter 12 and the bridge circuit 13 to continue charging with normal power or continue charging with limited power. The arithmetic operation result comparison unit 22b instructs the power transmitter coil position control unit 22d to move the position of the transmitter coil 16.

The arithmetic operation result storage unit 22c stores a maximum value of the efficiency E(t) calculated by the arithmetic operation unit 22a while sequentially updating the maximum value.

The power transmitter coil position control unit 22d instructs a movement position of the power transmitter coil 16 to the moving mechanism 17 based on a current position of the power receiver coil 31 detected by the power receiver coil position detection circuit 20 and a movement instruction for the position of the power transmitter coil 16 by the arithmetic operation result comparison unit 22b.

Note that, although the configuration in which the charging stand 19 includes the power transmitter coil 16 (the movable coil), the position of which is capable of being changed, is explained here, the power transmitter coil 16 may include a plurality of fixed coils. In the case where the power transmitter coil 16 includes a plurality of fixed coils, the position detection controller 18 and the power receiver coil position detection circuit 20 in FIG. 2 are unnecessary, and an energization control unit having a function of selecting one out of the plurality of fixed coils and energizing the selected one is provided instead of the moving mechanism 17 in FIG. 2, and the power transmitter coil position control unit 22d gives the energization control unit an instruction to change the fixed coil to be energized.

### (Structure of the charging stand)

A schematic structure of the charging stand 19 is explained with reference to FIG. 2. FIG. 2 is a diagram illustrating an example of a schematic structure of the charging stand. Note that, in the following explanation, a case where the charging stand 19 includes the power transmitter coil 16, the position of which is capable of being changed, is explained.

The charging stand 19 is packaged by a housing 40 and includes the moving mechanism 17. The moving mechanism 17 moves the power transmitter coil 16 in an X-axis direction and a Y-axis direction along the upper surface of the charging stand 19. The moving mechanism 17 moves the power transmitter coil 16 along an X axis and a Y axis according to an operation of a servomotor 32 controlled by a position control circuit 38. The servomotor 32 includes an X-axis servo motor 32a and a Y-axis servomotor 32b. The X-axis servo motor 32a is an actuator that moves the power transmitter coil 16 along the X axis. The Y-axis servomotor 32b is an actuator that moves the power transmitter coil 16 along the Y axis.

The X-axis servo motor 32a drives to rotate a pair of X-axis screw rods 33a installed in parallel to each other along the X-axis. Belts 35 are respectively stretched at both ends of the pair of X-axis screw rods 33a and the pair of X-axis screw rods rotate in synchronization with each other in a direction corresponding to a rotating direction of the X-axis servo motor 32a. X-axis nut members 34a are respectively screwed into the pair of X-axis screw rods 33a. Guide rods not illustrated in FIG. 2 that are respectively installed in parallel to the pair of X-axis screw rods 33a and assists movement of the X-axis nut members 34a along the X-axis penetrate the X-axis nut members 34a. The X-axis nut members 34a screwed into the pair of X-axis screw rods 33a are connected to each other by the Y-axis screw rod 33b and a guide rod 36 installed in parallel to each other. The power transmitter coil 16 is configured in a form in which a wire material is wound around a core 37 made of a magnetic body such as ferrite. An AC voltage is supplied to the power transmitter coil 16 from a power supply circuit 39. A Y-axis nut member 34b is installed on the rear surface side of the core 37 and a Y-axis screw rod 33b is screwed into the Y-axis nut member 34b. The guide rod 36 penetrates the core 37 in parallel to the Y-axis screw rod 33b.

When the pair of X-axis screw rods 33a rotates according to rotation of the X-axis servo motor 32a, the pair of X-axis nut members 34a move in a direction corresponding to a rotating direction of the X-axis screw rods 33a. Accordingly, the power transmitter coil 16 moves along the X axis.

The Y-axis servomotor 32b is installed in one X-axis nut member 34a and drives to rotate Y-axis screw rod 33b installed along the Y-axis. When the Y-axis screw rod 33b rotates according to rotation of Y-axis servomotor 32b, the Y-axis nut member 34b moves in a direction corresponding to a rotating direction of the Y-axis screw rod 33b. Accordingly, the power transmitter coil 16 moves along the Y axis. Note that the above is an example. A power transmitter coil moving mechanism can also be implemented by another configuration or only one axis of the X-axis and the Y-axis.

Note that the charging stand 19 may include a plurality of power transmitter coils, installation positions of which are fixed, instead of the moving mechanism 17 including the power transmitter coil 16.

### (Positional relation between the power transmitter coil and the power receiver coil)

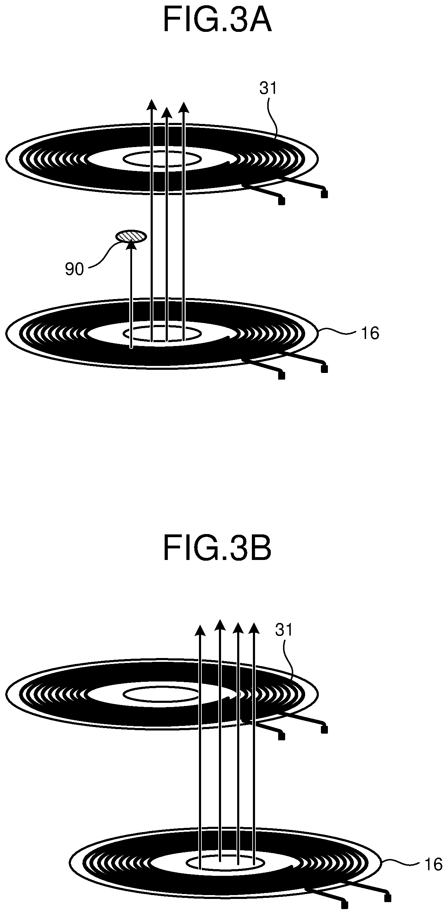

A positional relation between the power transmitter coil 16 and the power receiver coil 31 is explained with reference to FIG. 3A and FIG. 3B. FIG. 3A is a diagram illustrating an example of a power transmission state in the case where a foreign object is present between the power transmitter coil and the power receiver coil. FIG. 3B is a diagram illustrating an example of a power transmission state in the case where positional misalignment has occurred between the power transmitter coil and the power receiver coil.

As illustrated in FIG. 3A, when a metal foreign object 90 is present between the power transmitter coil 16 and the power receiver coil 31, a power loss occurs between transmitted power transmitted by the power transmitter coil 16 and received power received by the power receiver coil 31.

That is, in the case of FIG. 3A, since a part of a magnetic flux generated by the power transmitter coil 16 passes through the metal foreign object 90 and is consumed as an eddy current, efficiency of magnetic coupling between the power transmitter coil 16 and the power receiver coil 31 is deteriorated. At this time, since a part of the magnetic flux (an upward arrow in FIG. 3A) generated by the power transmitter coil 16 does not reach the center position of the power receiver coil 31, the efficiency E(t) of power transmission is deteriorated.

For example, in FIG. 3A, it is assumed that transmitted power Pout(t) of the power transmitter coil 16 is 14.5 W and received power Rp(t) of the power receiver coil 31 is 10 **W.** Even in the case where the metal foreign object 90 is absent, a constant power loss occurs between the transmitted power Pout(t) of the power transmitter coil 16 and the received power Rp(t) of the power receiver coil 31. The power loss is assumed to be 2 **W.** Then, transmitted power of the charging device 10 is lost by 2 W because of the power loss and is further lost by 2.5 W because of the metal foreign object 90.

The metal foreign object 90 absorbs the electric power of 2.5 W and generates heat. Because of such heat generation of the metal foreign object 90, there is a risk of burning due to a touch on the charging device 10 and the terminal device 30, a risk of burning due to the heat generation of the metal foreign object 90, and a risk of deterioration or ignition of the charging device 10 and the terminal device 30. Therefore, in general, in the case where the loss of the transmitted power exceeds a threshold, the charging by the charging device 10 is stopped.

On the other hand, FIG. 3B illustrates the power transmitter coil 16 and the power receiver coil 31 performing charging in a state in which the center positions of the coils are shifted from each other.

In FIG. 3B, it is assumed that the transmitted power Pout(t) of the power transmitter coil 16 is 14.5 W and the received power Rp(t) of the power receiver coil 31 is 10 W. In this case as well, a normal power loss of 2 W occurs. In the case of FIG. 3B, since the center position of the power transmitter coil 16 and the center position of the power receiver coil 31 are shifted, the efficiency of the magnetic coupling is deteriorated, that is, a part of the magnetic flux (an upward arrow in FIG. 3B) generated in the power transmitter coil 16 does not reach the center position of the power receiver coil 31. A power loss of 2.5 W occurs because of positional misalignment between the power transmitter coil 16 and the power receiver coil 31.

Note that, although FIG. 3B illustrates an example in which a coil surface of the power receiver coil 31 moves on a plane parallel to a coil surface of the power transmitter coil 16. However, the same applies in the case where the coil surface of the power transmitter coil 16 moves in a direction away from the coil surface of the power receiver coil 31. For example, in the case where a thick cover is attached to the terminal device 30 that performs charging, the distance between the power transmitter coil 16 and the power receiver coil 31 increases when placing it on the charging stand 19 as compared with in the case where the cover is not attached. In such a case as well, a power loss occurs. When a lens of a camera is installed on the rear surface of the terminal device 30, that is, a surface on a side where the power receiver coil 31 is installed, an outer frame of the lens sometimes protrudes from the rear surface of the terminal device 30. In such a case, when the terminal device 30 is placed on the charging stand 19, the terminal device 30 obliquely rises because of the influence of the outer frame of the lens and the parallelism between the coil surface of the power transmitter coil 16 and the coil surface of the power receiver coil 31 is lost. In such a case as well, a power loss occurs.

When FIG. 3A and FIG. 3B are compared, the power loss due to the metal foreign object 90 and the power loss due to the positional misalignment between the power transmitter coil 16 and the power receiver coil 31 are equal. In the case where the power loss due to the positional misalignment between the power transmitter coil 16 and the power receiver coil 31 occurs as illustrated in FIG. 3B, the charging does not need to be stopped because heat generation of the metal foreign object 90 is not caused.

In the case where metal foreign object 90 is present between the power transmitter coil 16 and the power receiver coil 31 as illustrated in FIG. 3A, the charging device 10 in the present embodiment continues charging as much as possible in a state in which the transmitted power Pout(t) is limited in order to suppress heat generation of the metal foreign object 90. In the case where there is a positional misalignment between the power transmitter coil 16 and the power receiver coil 31 as illustrated in FIG. 3B, charging is continued as much as possible by moving the position of the power transmitter coil 16 or selecting the power transmitter coil 16 having a higher coupling. In the case where the presence of the metal foreign object 90 is detected, the charging device 10 may stop the power transmission and instruct the user to remove the metal foreign object 90.

### (Functional configuration of the charging device)

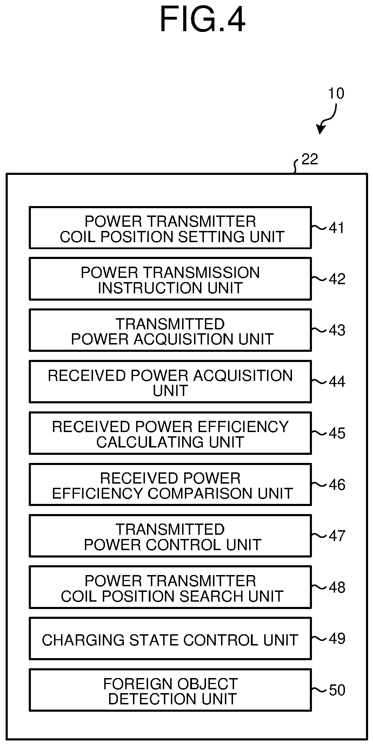

A functional configuration of the charging device 10 is explained with reference to FIG. 4. FIG. 4 is a functional block diagram illustrating an example of a functional configuration of the control unit included in the charging device in the embodiment.

The control unit 22 of the charging device 10 includes functional parts illustrated in FIG. 4. That is, the control unit 22 includes a power transmitter coil position setting unit 41, a power transmission instruction unit 42, a transmitted power acquisition unit 43, a received power acquisition unit 44, a received power efficiency calculation unit 45, a received power efficiency comparison unit 46, a transmitted power control unit 47, a power transmitter coil position search unit 48, a charging state control unit 49, and a foreign object detection unit 50.

These functional parts may be implemented by software installed in the control unit 22 as a control program or may be implemented by dedicated hardware. The functional parts may be implemented by a hybrid configuration of software and dedicated hardware.

When the terminal device 30 is placed on the charging stand 19, the power transmitter coil position setting unit 41 sets the position of the power transmitter coil 16 at a position where there is no positional misalignment from the power receiver coil 31. In the case where the charging device 10 includes the power transmitter coil 16 (the movable coil), the position of which is capable of being changed, the power transmitter coil position setting unit 41 sets the position of the power transmitter coil 16 to a position facing the power receiver coil 31 based on the position of the power receiver coil 31 detected by the power receiver coil position detection circuit 20. Then, the power transmitter coil 16 is moved to the position set by the power transmitter coil position setting unit 41 by the moving mechanism 17. On the other hand, in the case where the charging device 10 includes the plurality of fixed coils as the power transmitter coil 16, the power transmitter coil position setting unit 41 sets the position of the fixed coil having the best received power efficiency as the position of the power transmitter coil 16 while sequentially energizing the fixed coils.

The power transmission instruction unit 42 controls the DC-DC converter 12 and the bridge circuit 13 based on an instruction of the transmitted power control unit 47 and/or the charging state control unit 49 explained below. Accordingly, electric power is supplied to the power transmitter coil 16. Specifically, the power transmission instruction unit 42 instructs the DC-DC converter 12 and the bridge circuit 13 to perform energization to thereby cause the power transmitter coil 16 to generate a magnetic flux to cause the power transmitter coil 16 to transmit electric power. The magnetic flux generated by the power transmitter coil 16 generates an induced electromotive force in the power receiver coil 31 and the terminal device 30 is charged.

The transmitted power acquisition unit 43 acquires the magnitude of the transmitted power Pout(t) transmitted to the power transmitter coil 16 by the power transmission instruction unit 42. Note that the transmitted power acquisition unit 43 acquires the magnitude of the transmitted power Pout(t) by integrating a voltage detected by the voltage detection circuit 14 and an electric current detected by the current detection circuit 15 at the same time t.

The received power acquisition unit 44 acquires, from the terminal device 30, the magnitude of received power Rp(t) received by the power receiver coil 31 at time t. More specifically, the received power acquisition unit 44 receives information including the received power Rp(t), a received power target value, and the like transmitted from the terminal device 30 by packet communication. Then, the received power acquisition unit 44 demodulates the received information to thereby acquire the received power Rp(t) .

The received power efficiency calculation unit 45 calculates the efficiency E(t) of the received power Rp(t) with respect to the transmitted power Pout (t). Note that the efficiency E(t) is an example of the ratio in the present disclosure. The received power efficiency calculation unit 45 is an example of the arithmetic operation unit in the present disclosure.

The received power efficiency comparison unit 46 compares the efficiency E(t) calculated during charging and the preset threshold Eth. When the efficiency E(t) is smaller than the threshold Eth, the received power efficiency comparison unit 46 determines that positional misalignment of the terminal device 30 has occurred or the metal foreign object 90 has been inserted. When the power transmitter coil 16 moves in a state in which the transmitted power control unit 47 limits the transmitted power Pout(t) to the power transmitter coil 16, the received power efficiency comparison unit 46 compares the efficiencies E(t) calculated with time and stores the highest efficiency E(t). The received power efficiency comparison unit 46 compares the efficiency E(t) at the time when charging is started and the highest efficiency E(t) acquired when the power transmitter coil 16 is moved.

Note that it is desirable that a value of the threshold Eth can be set for each of the terminal devices 30 to be charged. For example, in the case where the charging device 10 is used in a state of being mounted on a vehicle, a type of the terminal device 30 charged by the charging device 10 is limited to an owner of the vehicle, a family, and the like. Therefore, the efficiency E(t) may be measured in advance for each of the terminal devices 30 to be charged and the terminal device 30 and the value of the threshold Eth may be stored in correlation with each other.

When the terminal device 30 is placed on the charging device 10 and charging is started, information capable of identifying a model of the terminal device 30 is transmitted from the terminal device 30 to the charging device 10, whereby the charging device 10 can specify the model of the placed terminal device 30. Then, the charging device 10 may invoke and set the threshold Eth correlated with the specified model. When the terminal device 30 is placed on the charging device 10, the user may input, using an operation system not illustrated in FIG. 1, identification information for specifying the terminal device 30 placed on the charging device 10. Then, the charging device 10 may invoke the threshold Eth correlated with the terminal device 30 from the input identification information and set the threshold Eth.

The transmitted power control unit 47 performs control concerning electric power transmitted from the power transmitter coil 16 to the power receiver coil 31. For example, the transmitted power control unit 47 performs control concerning limitation and removal of the limitation of the transmitted power Pout(t) based on, for example, an instruction of the charging state control unit 49 explained below.

In the case where the efficiency E(t) is smaller than the threshold Eth, the power transmitter coil position search unit 48 moves the position of the power transmitter coil 16 in a state in which the power transmitted power Pout(t) is limited by the transmitted power control unit 47 and searches for a position of the power transmitter coil 16 where the efficiency E(t) calculated by the received power efficiency calculation unit 45 is maximized. In the case where the charging device 10 includes the power transmitter coil 16 (the movable coil), the position of which is capable of being changed, the power transmitter coil position search unit 48 moves the position of the power transmitter coil 16 with the moving mechanism 17 and searches for a position of the power transmitter coil 16 where the efficiency E(t) is maximized. In the case where the charging device 10 includes the plurality of fixed coils as the power transmitter coil 16, the power transmitter coil position search unit 48 searches for the fixed coil in which the efficiency E(t) is maximized while sequentially energizing the fixed coils. Note that the power transmitter coil position search unit 48 is an example of the power transmission position search unit in the present disclosure.

In the case where the efficiency E(t) at the position of the power transmitter coil 16 retrieved by the power transmitter coil position search unit 48 is equal to or greater than the threshold Eth, the charging state control unit 49 causes the transmitted power control unit 47 to remove the limitation of the transmitted power Pout(t) at the position of the power transmitter coil 16 retrieved by the power transmitter coil position search unit 48 and continues the charging.

In the case where the efficiency E(t) at the position of the power transmitter coil 16 retrieved by the power transmitter coil position search unit 48 is smaller than the threshold Eth, the charging state control unit 49 cuts off the supply of electric power to the power transmitter coil 16 to stop the charging.

The charging state control unit 49 determines whether the terminal device 30 has changed to a fully charged state. Specifically, for example, in the case where a packet called EPT (End Power Transfer) is received from the terminal device 30 or in the case where an average value in a fixed period of packets indicating a received power target value called CEP (Control Error Packet) is extremely low, the charging state control unit 49 determines that the terminal device 30 has changed to the fully charged state.

In a state in which the charging device 10 is not performing charging, the foreign object detection unit 50 detects, based on a coupling state of the power transmitter coil 16 and the power receiver coil 31 at the time when the power receiver coil 31 is placed at a position not deviating from the power transmitter coil 16, whether the metal foreign object 90 is present between the power transmitter coil 16 and the power receiver coil 31.

### (Operation example (1) of the charging device)

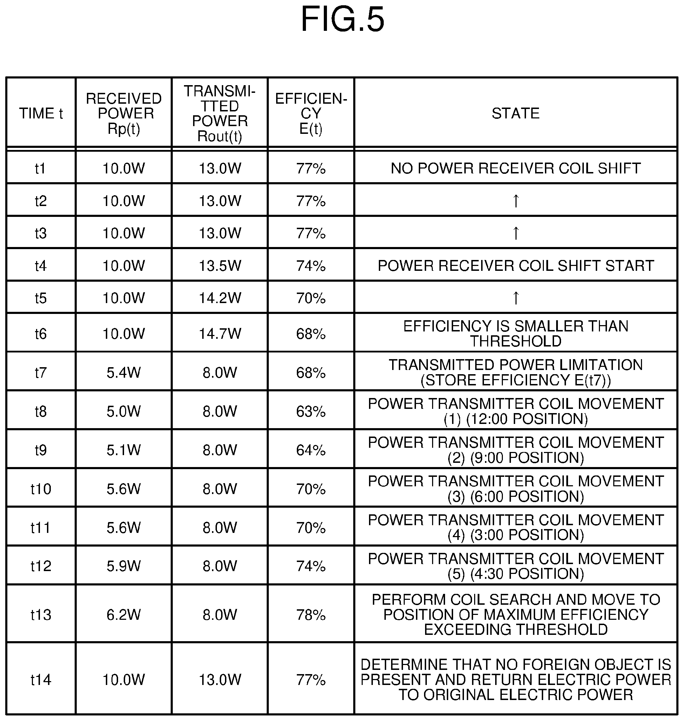

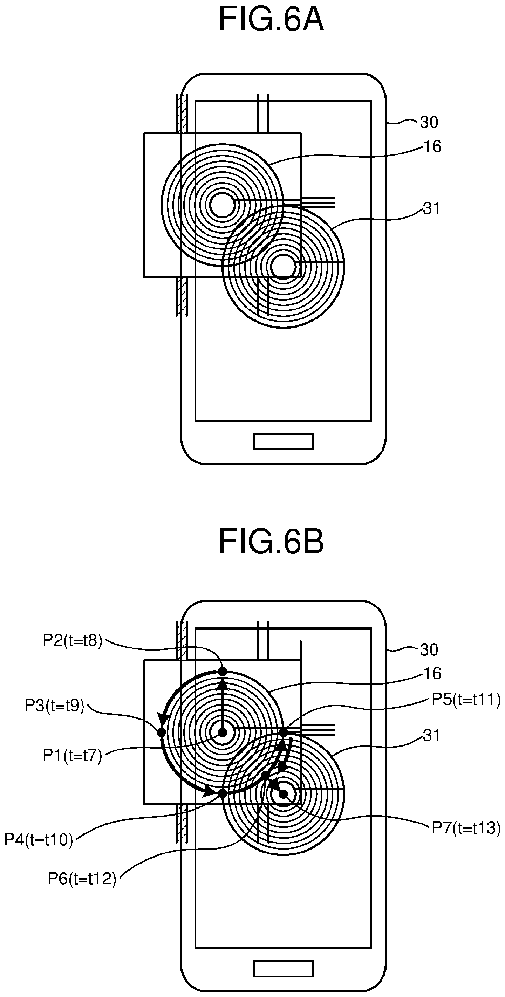

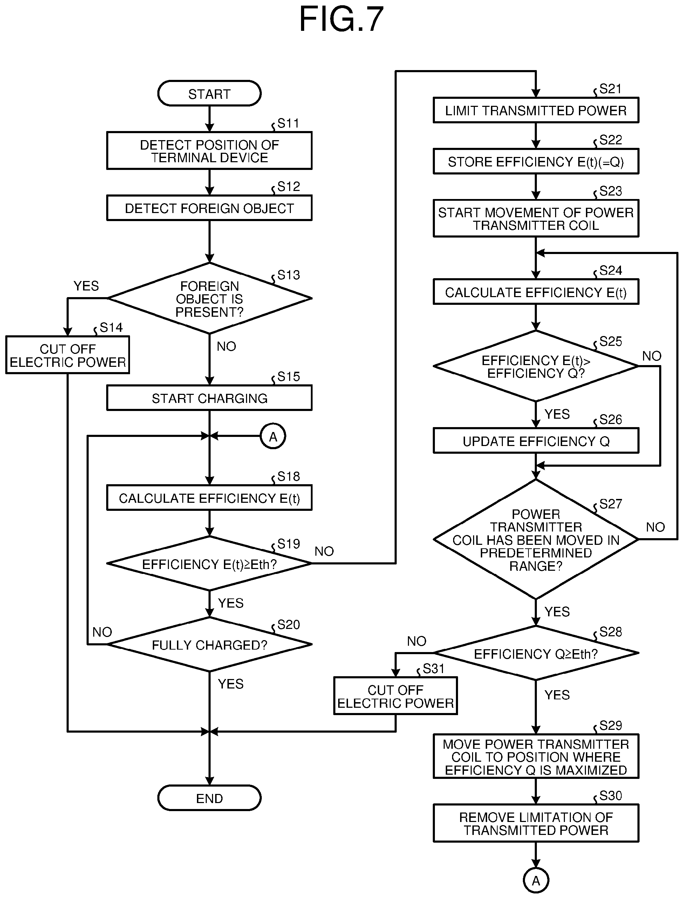

A first operation example of the charging device 10 is explained with reference to FIG. 5, FIG. 6A, and FIG. 6B. FIG. 5 is a diagram illustrating an example of the operation of the charging device in the case where positional misalignment of the power receiver coil has occurred. FIG. 6A is a diagram illustrating an example of a positional relation between the power receiver coil and the power transmitter coil at time t7 in FIG. 5. FIG. 6B is a diagram illustrating an example of a state in which the charging device moves the position of the power transmitter coil from time t8 to time t13 in FIG. 5. This first operation example corresponds to the flowchart illustrated in FIG. 7 explained below.

Time t=t1 in FIG. 5 indicates a state in which, when the terminal device 30 is placed on the charging stand 19, the position of the power transmitter coil 16 is set at a position where there is no positional misalignment from the power receiver coil 31, and charging is started.

At this time, it is assumed that the charging device 10 transmits transmitted power Pout(t1) =13.0 W, and the terminal device 30 receives received power Rp(t1) =10.0 W. That is, efficiency E(t1) is 77%. Thereafter, the charging device 10 continues charging the terminal device 30.

For example, in the case where the charging device 10 is used in an on-vehicle state, since the terminal device 30 is simply placed on the charging stand 19, the position of the terminal device 30 sometimes changes because of vibration of the vehicle. In the example illustrated in FIG. 5, the position of the terminal device 30 moves from time t=t4 to time t=t6. At this time, since a loss of the transmitted power Pout(t) of the charging device 10 increases, the efficiency E(t) is deteriorated as illustrated in FIG. 5. Then, at time t=t6, it is assumed that the efficiency E(t) has fallen below the preset threshold Eth (for example, 70%) of the efficiency E(t). When the efficiency E(t) has been deteriorated, the power transmission instruction unit 42 increases the transmitted power Pout(t) such that the desired received power Rp(t) can be obtained. Therefore, as illustrated in FIG. 5, the transmitted power Pout(t) increases from time t=t4 to time t=t6.

At this time, there is a possibility that a metal foreign object 90 is present between the power transmitter coil 16 and the power receiver coil 31. Therefore, in order to suppress heat generation of the metal foreign object 90, the charging state control unit 49 causes the transmitted power control unit 47 to limit the transmitted power Pout(t) transmitted to the power transmitter coil 16. Note that a limitation amount of the transmitted power is desirably set to, for example, approximately a half of the original transmitted power Pout(t). However, in the example illustrated in FIG. 5, the transmitted power Pout(t) is limited to 8.0 W.

Note that, at time t=t7, it is assumed that the power transmitter coil 16 and the power receiver coil 31 (the terminal device 30) are in the positional relation illustrated in FIG. 6A. That is, the terminal device 30 is positionally deviated from the power transmitter coil 16 in the 4:30 direction of the analog clock.

When the transmitted power Pout(t) is limited to 8.0 W at time t=t7, the received power efficiency calculation unit 45 calculates efficiency E(t7). The calculated efficiency E(t7) is stored in the arithmetic operation result storage unit 22c.

Thereafter, the power transmitter coil position search unit 48 moves the position of the power transmitter coil 16 in a state in which the transmitted power control unit 47 limits the transmitted power Pout(t) and searches for a position of the power transmitter coil 16 where the efficiency E(t) calculated by the received power efficiency calculation unit 45 is maximized.

Although a moving pattern of the power transmitter coil 16 does not matter, in the example illustrated in FIG. 5, a position P1 (see FIG. 6B), which is the center position of the power transmitter coil 16 at time t=t7, is moved to the outer edge of the power transmitter coil 16, that is, a position P2 in the 12:00 direction at time t=t8. Thereafter, as time t elapses, the center position of the power transmitter coil 16 is moved counterclockwise along the outer edge position of the power transmitter coil 16 at time t=t7.

That is, the center position of the power transmitter coil 16 moves to a position P3 at time t=t9. The center position of the power transmitter coil 16 moves to a position P4 at time t=t10 and moves to a position P5 at time t=t11. At positions to which the power transmitter coil 16 has moved, the received power efficiency calculation unit 45 calculates the efficiency E(t) in a state in which the transmitted power Pout(t) is limited. A sampling interval of the efficiency E(t) illustrated in FIG. 5 depends on a received power packet interval notified from the terminal device 30. That is, the efficiency E(t) is calculated at any time as well while the power transmitter coil 16 is moving.

In the example illustrated in FIG. 5, it is assumed that power transmitter coil position search unit 48 has retrieved that a position where efficiency E(t) is maximized is present between efficiency E(t10) at time t=t10 and efficiency E(t11) at time t=t11. At this time, at time t=t12, the power transmitter coil position search unit 48 moves the power transmitter coil 16 to a 4:30 position P6, which is an intermediate point between the position P4 at time t=t10 and the position P5 at time t=t11.

Since efficiency E(t12) at the position P6 is a high value, the power transmitter coil position search unit 48 searches for a position where the efficiency E(t) is higher. For example, at time t=t13, the power transmitter coil 16 is moved to a position P7 further on the outer side at 4:30.

Since efficiency E(t13) =78% at the position P7 is a maximum value exceeding the threshold Eth, the charging device 10 determines that the position P7 is a position where the terminal device 30 is deviated. Then, since the efficiency E(t13) exceeds the threshold Eth, the charging device 10 determines that a metal foreign object is absent between the power transmitter coil 16 and the power receiver coil 31.

Subsequently, at time t=t14, the charging state control unit 49 removes the limitation of the transmitted power Pout(t) by the transmitted power control unit 47 and continues the charging.

Note that, in the case where the charging device 10 includes a plurality of fixed coils instead of the movable power transmitter coil 16, the position of the power receiver coil 31 is retrieved as explained above by selecting and energizing the fixed coils in order.

### (Flow of processing performed by the charging device)

A flow of processing performed by the charging device 10 is explained with reference to FIG. 7. FIG. 7 is a flowchart illustrating an example of a flow of processing performed by the charging device in the embodiment. In the flowchart illustrated in FIG. 7, the charging device 10 monitors the efficiency E(t) after a start of charging and, in the case where it is not determined that the efficiency E(t) is equal to or greater than the threshold, limits the transmitted power considering a possibility that a metal foreign object is present between the power transmitter coil 16 and the power receiver coil 31. Then, in a state in which the transmitted power is limited, charging device 10 moves the power transmitter coil 16 and searches for a position where the efficiency E(t) is equal to or greater than the threshold to eliminate positional misalignment between the power transmitter coil 16 and the power receiver coil 31. In the case where the efficiency E(t) is not improved to the threshold or more even if the power transmitter coil 16 is moved, since it is estimated that there is a possibility that a metal foreign object is present between the power transmitter coil 16 and the power receiver coil 31, the charging device 10 cuts off electric power.

In FIG. 7, when the terminal device 30 is placed on the charging stand 19, the charging device 10 detects the position of the terminal device 30 (step S11). Specifically, when the terminal device 30 is placed on the charging stand 19, the power transmitter coil position setting unit 41 sets the position of the power transmitter coil 16 at a position where there is no positional misalignment from the power receiver coil 31. In the case where the charging device 10 includes the power transmitter coil 16 (the movable coil), the position of which is capable of being changed, the power transmitter coil position setting unit 41 sets the position of the power transmitter coil 16 to a position facing the power receiver coil 31 based on the position of the power receiver coil 31 detected by the power receiver coil position detection circuit 20. Then, the power transmitter coil 16 is moved to, by the moving mechanism 17, the position set by the power transmitter coil position setting unit 41 and various authentications are performed between the charging device 10 and the terminal device 30. On the other hand, in the case where the charging device 10 includes the plurality of fixed coils as the power transmitter coil 16, the power transmitter coil position setting unit 41 sets the position of the fixed coil having the best received power efficiency as the position of the power transmitter coil 16 while sequentially energizing the fixed coils. Then, when the position of the power transmitter coil is set, various authentications are performed between the charging device 10 and the terminal device 30.

The foreign object detection unit 50 detects whether the metal foreign object 90 is present between the power transmitter coil 16 and the power receiver coil 31 in a state in which charging is not performed (step S12).

The foreign object detection unit 50 determines whether a foreign object has been detected (step S13). When it is determined that a foreign object has been detected (step S13: Yes), it proceeds to step S14. On the other hand, when it is not determined that a foreign object has been detected (step S13: No), it proceeds to step S15.

When it is determined in step S13 that a foreign object has been detected, the charging state control unit 49 cuts off the power supply to the power transmitter coil 16 (step S14). Thereafter, the charging device 10 ends the processing illustrated in FIG. 7. Note that, at this time, the charging device 10 may alert, with an indicator, a monitor, a buzzer, a speaker, or the like not illustrated in FIG. 1, a possibility that the metal foreign object 90 is inserted.

When it is not determined in step S13 that a foreign object has been detected, the charging state control unit 49 causes the power transmission instruction unit 42 to start charging the terminal device 30 (step S15) .

The received power efficiency calculation unit 45 calculates the efficiency E(t) (step S18). Specifically, the received power efficiency calculation unit 45 calculates the efficiency E(t) from the transmitted power Pout(t) acquired by the transmitted power acquisition unit 43 and the received power Rp(t) acquired by the received power acquisition unit 44.

The received power efficiency comparison unit 46 determines whether the efficiency E(t) calculated in step S18 is equal to or greater than the threshold Eth (step S19). When it is determined that the efficiency E(t) is equal to or greater than the threshold Eth (step S19: Yes), it proceeds to step S20. On the other hand, if it is not determined that the efficiency E(t) is equal to or greater than the threshold Eth (step S19: No), it proceeds to step S21.

When it is determined in step S19 that the efficiency E(t) is equal to or greater than the threshold Eth, the charging state control unit 49 determines whether the terminal device 30 is in a fully charged state (step S20). When it is determined that the terminal device 30 is in the fully charged state (step S20: Yes), the charging device 10 ends the processing illustrated in FIG. 7. On the other hand, when it is not determined that the terminal device 30 is in the fully charged state (step S20: No), the processing returns to step S18.

When it is not determined in step S19 that the efficiency E(t) is equal to or greater than the threshold Eth, the charging state control unit 49 causes the transmitted power control unit 47 to limit the transmitted power Pout(t) transmitted to the power transmitter coil 16 (step S21).

The received power efficiency calculation unit 45 calculates the efficiency E(t) at the time when the transmitted power Pout(t) is limited and stores the efficiency E(t) in the arithmetic operation result storage unit 22c. Note that the efficiency E(t) stored at this time is represented as efficiency Q (step S22). At this time, the position of the power transmitter coil 16 is also stored in the arithmetic operation result storage unit 22c.

Subsequently, the power transmitter coil position search unit 48 starts moving the power transmitter coil (step S23). The power transmitter coil position search unit 48 moves the power transmitter coil 16 based on a predetermined rule in order to search for a position of the power transmitter coil 16 where the efficiency E(t) is maximized.

When the power transmitter coil 16 is moving, the received power efficiency calculation unit 45 calculates the efficiency E(t) at a predetermined time interval (step S24) .

The received power efficiency comparison unit 46 determines whether the efficiency E(t) calculated in step S24 is greater than the efficiency Q (step S25). When it is determined that the efficiency E(t) is greater than the efficiency Q (step S25: Yes), it proceeds to step S26. On the other hand, when it is not determined that the efficiency E(t) is greater than the efficiency Q (step S25: No), it proceeds to step S27.

When it is determined in step S25 that the efficiency E(t) is greater than the efficiency Q, the received power efficiency comparison unit 46 replaces the efficiency Q with the efficiency E(t) calculated in step S24 (step S26). A value of the replaced efficiency Q is stored in the arithmetic operation result storage unit 22c together with the position of the power transmitter coil 16 at that time.

The power transmitter coil position search unit 48 determines whether the power transmitter coil 16 has been moved within a predetermined range (step S27). When it is determined that the power transmitter coil 16 has been moved within the predetermined range (step S27: Yes), it proceeds to Step S28. On the other hand, when it is not determined that the power transmitter coil 16 has been moved within the predetermined range (step S27: No), the processing returns to Step S24. That is, the processing in step S24 to step S26 is repeatedly performed until the power transmitter coil 16 is moved within the predetermined range. Since the power transmitter coil 16 is moved and the efficiency E(t) is monitored while the position is changed within the predetermined range, in the case where positional misalignment of the power receiver coil has occurred after the start of charging, the power transmitter coil 16 and the power receiver coil 31 of the terminal device 30 can be aligned without the position of the terminal device 30 being detected by the power receiver coil position detection circuit 20.

When it is determined in step S27 that the power transmitter coil 16 has been moved within the predetermined range, the received power efficiency comparison unit 46 determines whether the efficiency Q is equal to or greater than the threshold Eth used in step S19 (step S28). When it is determined that the efficiency Q is equal to or greater than the threshold Eth (step S28: Yes), it proceeds to step S29. On the other hand, when it is not determined that the efficiency Q is equal to or greater than the threshold Eth (step S28: No), it proceeds to step S31.

When it is determined in step S28 that efficiency Q is equal to or greater than threshold Eth, the power transmitter coil position search unit 48 moves the power transmitter coil 16 to a position where efficiency Q is maximized (step S29).

The charging state control unit 49 removes the limitation of the transmitted power performed in Step S21 (step S30). Thereafter, the processing returns to step S18.

When it is not determined in step S28 that the efficiency Q is equal to or greater than the threshold Eth, the charging state control unit 49 cuts off the power supply to the power transmitter coil 16 (step S31). Thereafter, the charging device 10 ends the processing illustrated in FIG. 7.

Note that, in all the steps illustrated in FIG. 7, the charging device 10 always monitors whether communication is continued with the terminal device 30. Then, in the case where it is detected that the communication with the terminal device 30 has been interrupted, the processing shifts to step S11 and the processing illustrated in FIG. 7 is performed again.

### (Operation example (2) of the charging device)

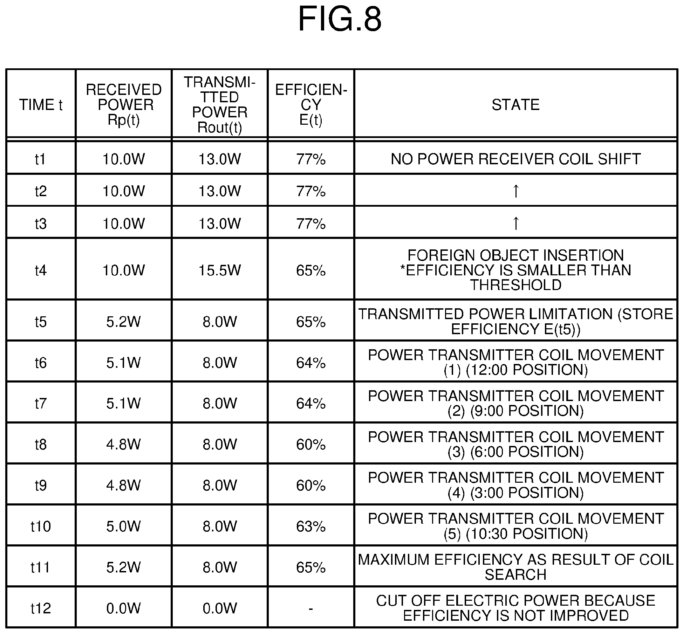

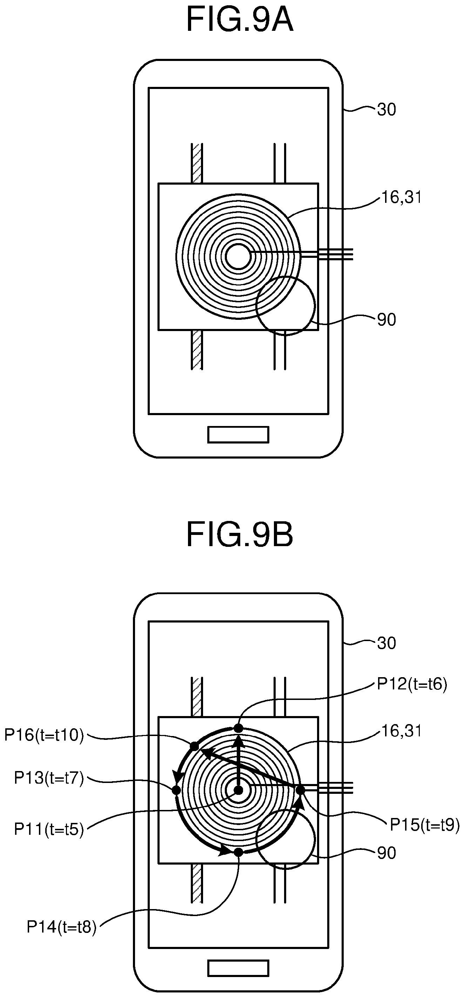

A second operation example of the charging device 10 is explained with reference to FIG. 8, FIG. 9A, and FIG. 9B. FIG. 8 is a diagram illustrating an example of an operation of the charging device in the case where a metal foreign object is inserted between the power receiver coil and the power transmitter coil. FIG. 9A is a diagram illustrating an example of a positional relation between the power receiver coil and the power transmitter coil at time t4 in FIG. 8. FIG. 9B is a diagram illustrating an example of a state in which the charging device moves the position of the power transmitter coil from time t5 to time t10 in FIG. 8. This second operation example corresponds to the flowchart illustrated in FIG. 7 explained above.

Time t=t1 in FIG. 8 indicates a state in which, when the terminal device 30 is placed on the charging stand 19, the position of the power transmitter coil 16 is set at a position where there is no positional misalignment from the power receiver coil 31 and charging is started.

At this time, it is assumed that the charging state control unit 49 transmits the transmitted power Pout(t1) =13.0 W and the terminal device 30 receives the received power Rp(t1) =10.0 W. That is, efficiency E(t1) is 77%. Thereafter, the charging state control unit 49 continues charging the terminal device 30.

For example, in the case where the charging device 10 is used in an on-vehicle state, since the terminal device 30 is simply placed on the charging stand 19, a metal foreign object such as a coin or a gum wrapping sheet (aluminum foil) is sometimes inserted between the terminal device 30 and the charging stand 19 because of vibration of a vehicle. In the example illustrated in FIG. 8, it is assumed that metal foreign object 90 is inserted at time t=t4. At this time, since a loss of the transmitted power Pout(t) of the charging device 10 increases, the efficiency E(t) is deteriorated as illustrated in FIG. 8. Here, when the efficiency E(t) is deteriorated, the power transmission instruction unit 42 increases the transmitted power Pout(t) such that desired received power Rp(t) can be obtained. For that reason, as illustrated in FIG. 8, the transmitted power Pout(t) has increased at time t=t4.

Then, it is assumed that efficiency E(t4) has fallen below the threshold Eth (for example, 70%) of the preset efficiency E(t) at time t=t4. At this time, there is a possibility that a metal foreign object 90 is present between the power transmitter coil 16 and the power receiver coil 31. Alternatively, there is a possibility that a positional relation between the power transmitter coil 16 and the power receiver coil 31 has shifted. Therefore, in order to suppress heat generation of the metal foreign object 90, the charging state control unit 49 causes the transmitted power control unit 47 to limit the transmitted power Pout(t) transmitted to the power transmitter coil 16. Note that a limit amount of the transmitted power is desirably set to, for example, approximately a half of the original transmitted power Pout (t). However, in the example illustrated in FIG. 8, the transmitted power Pout(t) is limited to 8.0 W.

When the transmitted power Pout(t) is limited to 8.0 W at time t=t5, the received power efficiency calculation unit 45 calculates efficiency E(t5). The calculated efficiency E(t5) is stored in the arithmetic operation result storage unit 22c.

Thereafter, the power transmitter coil position search unit 48 moves the position of the power transmitter coil 16 in a state in which the transmitted power control unit 47 limits the transmitted power Pout(t) and searches for a position of the power transmitter coil 16 where the efficiency E(t) calculated by the received power efficiency calculation unit 45 is maximized.

Although a moving pattern of the power transmitter coil 16 does not matter, in the example illustrated in FIG. 8, a position P11 (see FIG. 9B) that is the center position of the power transmitter coil 16 at time t=t5 is moved to the outer edge of the power transmitter coil 16, that is, a position P12 in the 12:00 direction at time t=t6. Thereafter, as time t elapses, the center position of the power transmitter coil 16 is moved counterclockwise along the outer edge position of the power transmitter coil 16 at time t=t5.

That is, the center position of the power transmitter coil 16 moves to a position P13 at time t=t7. The center position of the power transmitter coil 16 moves to a position P14 at time t=t8 and moves to a position P15 at time t=t9. At positions to which the power transmitter coil 16 has moved, the received power efficiency calculation unit 45 calculates the efficiency E(t) in a state in which the transmitted power Pout(t) is limited. Note that a sampling interval of the efficiency E(t) illustrated in FIG. 8 depends on a received power packet interval notified from the terminal device 30. That is, the efficiency E(t) is calculated at any time as well while the power transmitter coil 16 is moving.

In the example illustrated in FIG. 8, it is assumed that the power transmitter coil position search unit 48 has retrieved that there is a position where the efficiency E(t) is maximized between efficiency E(t6) at time t=t6 and efficiency E(t7) at time t=t7. At this time, at time t=t10, the power transmitter coil position search unit 48 moves the power transmitter coil 16 to a 10:30 position P16 that is an intermediate point between the position P12 at time t=t6 and the position P13 at time t=t7.

The power transmitter coil position search unit 48 further searches for a position where the efficiency E(t) is higher near the position P16. As a result, it is assumed that a maximum value (65%) of the efficiency E(t11) has been obtained at time t=t11.

Since the efficiency E(t11) at time t=t11 is equal to the efficiency E(t5) at time t=t5, the charging state control unit 49 determines that the efficiency E(t) is not improved. That is, the charging device 10 determines that positional misalignment between the power transmitter coil 16 and the power receiver coil 31 has not occurred but the metal foreign object 90 has been inserted between the power transmitter coil 16 and the power receiver coil 31.

Then, at time t=t12, the charging state control unit 49 cuts off the power supply to the power transmitter coil 16. Note that, at this time, since there is a possibility that a metal foreign object is inserted, the charging device 10 may alert that the power supply has been cut off.

Note that, in the case where the charging device 10 includes a plurality of fixed coils instead of the movable power transmitter coil 16, the position of the power receiver coil 31 is retrieved as explained above by selecting and energizing the fixed coils in order.

### (Operation example (3) of the charging device)

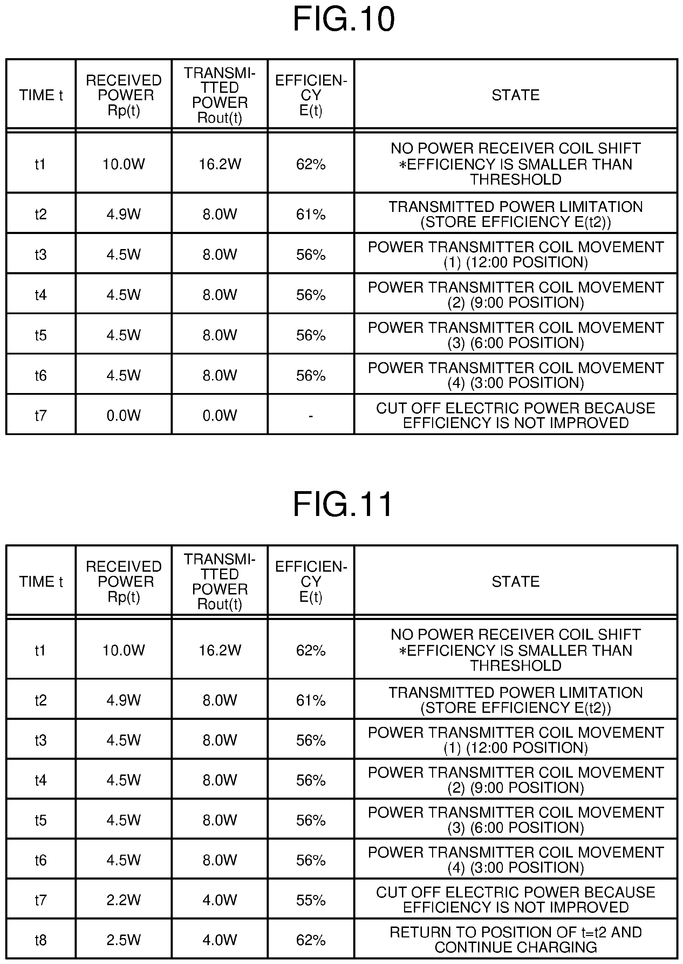

A third operation example of the charging device 10 is explained with reference to FIG. 10. FIG. 10 is a diagram illustrating an example of an operation of the charging device in the case where a metal foreign object is present between the power receiver coil and the power transmitter coil from the beginning. This third operation example corresponds to the flowchart illustrated in FIG. 7 explained above.

Time t=t1 in FIG. 10 indicates a state in which, when the terminal device 30 is placed on the charging stand 19, the position of the power transmitter coil 16 is set at a position where there is no positional misalignment from the power receiver coil 31 and charging is started. The efficiency E(t1) calculated by the received power efficiency calculation unit 45 at time t=t1 has a value smaller than the threshold Eth (for example, 70%).

Since the efficiency E(t1) is smaller than the threshold Eth, it is determined that there is a possibility that the metal foreign object 90 is present between the power transmitter coil 16 and the power receiver coil 31. The charging state control unit 49 causes the transmitted power control unit 47 to limit the power transmitted power Pout(t) transmitted to the power transmitter coil 16 to 8.0 W at time t=t2.

When the transmitted power Pout(t) is limited to 8.0 W at time t=t2, the received power efficiency calculation unit 45 calculates the efficiency E(t2). The calculated efficiency E(t2) is stored in the arithmetic operation result storage unit 22c.

Thereafter, the power transmitter coil position search unit 48 moves the position of the power transmitter coil 16 in a state in which the transmitted power control unit 47 limits the transmitted power Pout(t) and searches for a position of the power transmitter coil 16 where the efficiency E(t) calculated by the received power efficiency calculation unit 45 is maximized.

A moving pattern of the power transmitter coil 16 does not matter. However, in the example illustrated in FIG. 10, the center position of the power transmitter coil 16 at time t=t2 is moved to the outer edge of the power transmitter coil 16 in the 12:00 direction at time t=t3. Thereafter, as time t elapses, the center position of the power transmitter coil 16 is moved counterclockwise along the outer edge position of the power transmitter coil 16 at time t=t2. The received power efficiency calculation unit 45 calculates, at any time, the efficiency E(t) that changes with time.

Since it is found that the efficiency E(t) acquired from time t=t3 to time t=t6 does not exceed the efficiency E(t2) calculated at time t=t2, the charging state control unit 49 determines that the metal foreign object 90 is present between the power receiver coil 31 and the power transmitter coil 16 from the beginning and cuts off the power supply to the power transmitter coil 16 at time t=t7.

At this time, it is desirable that charging device 10 alerts that there is a possibility that the metal foreign object 90 is present between the power receiver coil 31 and the power transmitter coil 16.

Note that, even in the case where the efficiency of the power receiver coil 31 included in the terminal device 30 is originally poor, the same transition of the efficiency E(t) as the transition illustrated in FIG. 10 is observed. That is, in the present embodiment, a case where there is the metal foreign object 90 from the beginning between the power receiver coil 31 and the power transmitter coil 16 and a case where the efficiency of the power receiver coil 31 is originally poor cannot be distinguished. An operation example of the charging device 10 explained below is an example in which charging can be continued even in the case where the efficiency of the power receiver coil 31 is originally poor.

### (Operation example (4) of the charging device)

A fourth operation example of the charging device 10 is explained with reference to FIG. 11. In the flowchart illustrated in FIG. 7, in the case where the efficiency is not improved even if the power transmitter coil 16 is moved, electric power is cut off considering a possibility that a metal foreign object is present between the power transmitter coil 16 and the power receiver coil 31. However, transmitted power may be further limited to continue charging without electric power being cut off. That is, in the flowchart illustrated in FIG. 7, in the case where it is not determined that the efficiency Q is equal to or greater than the threshold Eth (step S28: No), the charging state control unit 49 may further limit the transmitted power to the power transmitter coil 16 and continue the charging. The charging state control unit 49 may continue the charging at a position of the power transmitter coil 16 where efficiency is maximized. FIG. 11 is a diagram illustrating an example of an operation of the charging device for, in the case where the power efficiency of the power transmitter coil 16 and the power receiver coil 31 is originally poor, further limiting transmitted power and continue charging because the efficiency E(t1) is not improved.

Time t=t1 in FIG. 11 indicates a state in which, when the terminal device 30 is placed on the charging stand 19, the position of the power transmitter coil 16 is set at a position where there is no positional misalignment from power receiver coil 31 and charging is started. The efficiency E(t1) calculated by the received power efficiency calculation unit 45 at time t=t1 has a value smaller than the threshold Eth (for example, 70%).

Since the efficiency E(t1) is smaller than the threshold Eth, it is determined that there is a possibility that the metal foreign object 90 is present between the power transmitter coil 16 and the power receiver coil 31. The charging state control unit 49 causes the transmitted power control unit 47 to limit the transmitted power Pout(t) transmitted to the power transmitter coil 16 to 8.0 W at time t=t2.

Thereafter, the power transmitter coil position search unit 48 moves the position of the power transmitter coil 16 in a state in which the transmitted power control unit 47 limits the transmitted power Pout(t) and searches for a position of the power transmitter coil 16 where the efficiency E(t) calculated by the received power efficiency calculation unit 45 is maximized. A search method is the same as the search method explained with reference to FIG. 10.

Since it is found that the efficiency E(t) acquired from time t=t3 to time t=t6 is not equal to or greater than the efficiency E(t2) calculated at time t=t2, the charging state control unit 49 causes the transmitted power control unit 47 to limit the transmitted power Pout(t) transmitted to the power transmitter coil 16 to 4.0 W at time t=t7.

At time t=t8, the power transmitter coil position search unit 48 returns the power transmitter coil 16 to the position at time t=t2 where the efficiency E(t) is maximized. Then, the charging state control unit 49 continues the charging in a state in which the transmitted power Pout(t) is limited to 4.0 W. Note that, in FIG. 11, in the case where a position where the efficiency E(t) is maximized is found other than time t=t2, the charging state control unit 49 returns the power transmitter coil 16 to the position where the efficiency E(t) is maximized and continues the charging in a state in which the transmitted power Pout(t) is limited to 4.0 W.

As explained above, by further limiting the transmitted power Pout(t), even in the case where the efficiency of the power receiver coil 31 is originally poor, the charging can be continued with the limited transmitted power Pout(t). Even in the case where the metal foreign object 90 is present between the power receiver coil 31 and the power transmitter coil 16 from the beginning, excessive heat generation (for example, 60°C or higher) of the metal foreign object 90 can be suppressed because the transmitted power Pout(t) is limited to 4.0 W. Note that the transmitted power control unit 47 may limit the transmitted power Pout(t) or may limit a power difference ΔW between the transmitted power Pout(t) and the received power Rp(t).

Note that, at this time, the charging device 10 desirably alerts that the charging is performed in a state in which the transmitted power Pout(t) is limited.

### (Operation example (5) of the charging device)

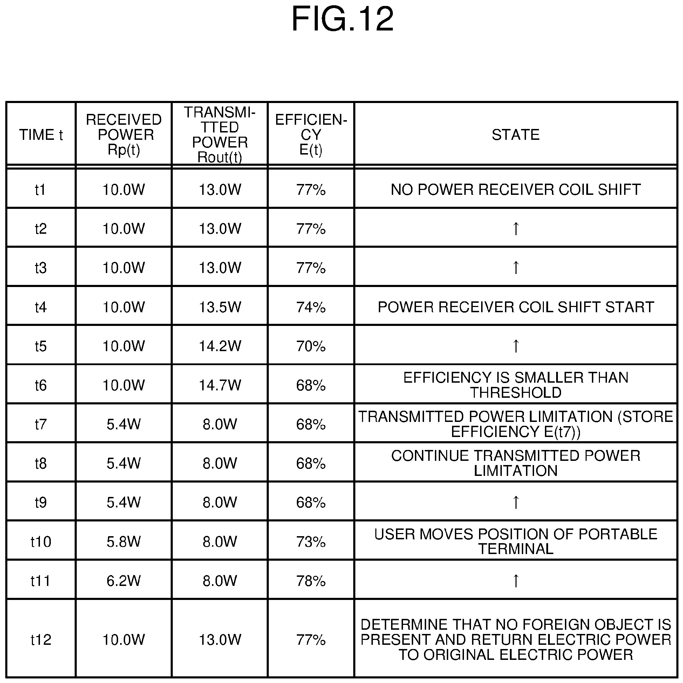

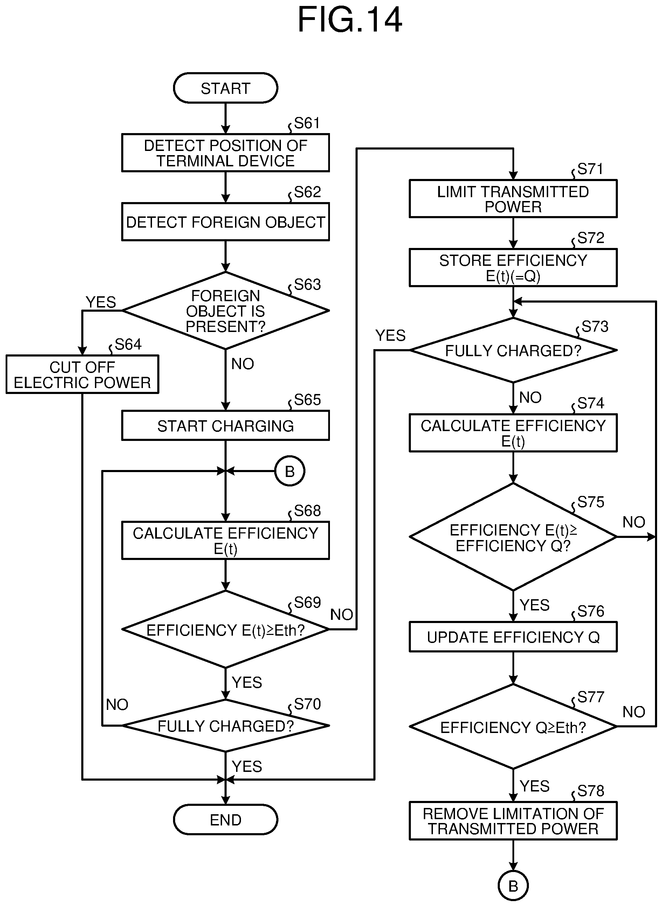

A fifth operation example of the charging device 10 is explained with reference to FIG. 12. FIG. 12 is a diagram illustrating an example of an operation of the charging device in the case where the user moves the position of the terminal device during charging. This fifth operation example corresponds to the flowchart illustrated in FIG. 14 explained below.

Since an operation from time t=t1 to time t=t7 is the same as the operation illustrated in FIG. 5, explanation of the operation is omitted.

At time t=t8 and subsequent time, the charging is continued in a state in which the transmitted power Pout(t) is limited.

It is assumed that the user has moved the position of the terminal device 30 from time t=t10 to time t=t11. At this time, the efficiency E(t10) and the efficiency E(t11) are improved and exceed the threshold Eth (=70%) .

At time t=t12, the charging state control unit 49 removes the limitation of the transmitted power Pout(t) by the transmitted power control unit 47, that is, returns the transmitted power Pout(t) to the original state and continues the charging.

As explained above, in the case where the efficiency E(t) is improved by the correction of the position of the terminal device 30 by the user, the charging state control unit 49 may remove the limitation of the transmitted power Pout(t) by the transmitted power control unit 47 and continue the charging. In particular, in the case where a placing position of the terminal device 30 has shifted to the outer side of a movable range of the power transmitter coil 16 or in the case where the power transmitter coil 16 includes the plurality of fixed coils, position correction operation by the user can be effectively utilized when the placing position of the terminal device 30 has shifted to the outer side of the fixed coils.

Note that, in the case where the efficiency E(t) is not improved, the charging device 10 may perform alert for urging the user to check the placing position of the terminal device 30.

### (Modification (1) of the embodiment)

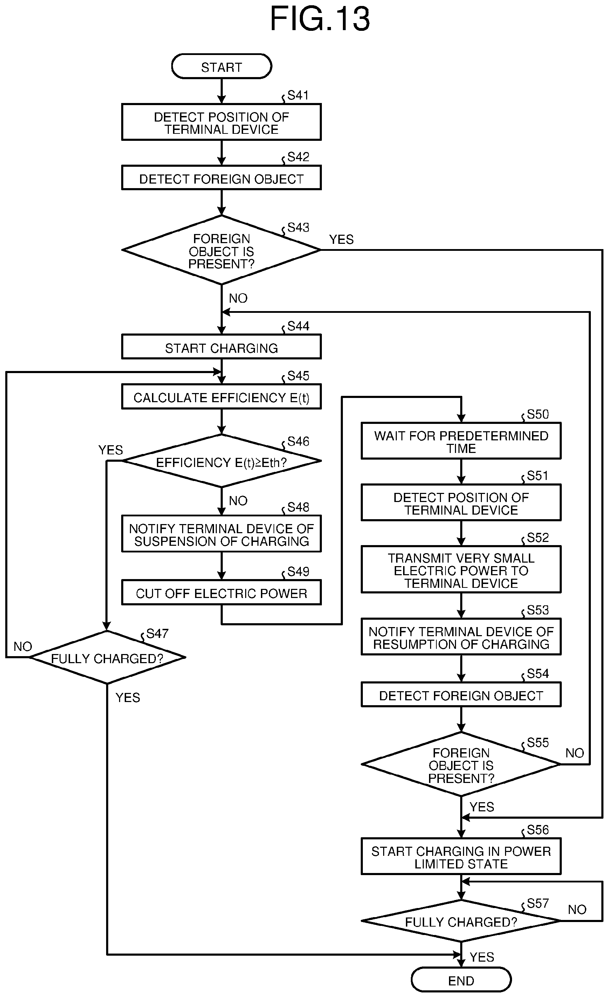

A first modification of the charging device 10 is explained with reference to FIG. 13. FIG. 13 is a flowchart illustrating an example of an operation in the first modification of the charging device in the embodiment.

In the case where the efficiency E(t) is smaller than the threshold Eth, the charging device 10 in the present modification temporarily stops the charging and performs, while the charging is temporarily stopped, detection of the position of the terminal device 30 and detection of whether the metal foreign object 90 is present between the power transmitter coil 16 and the power receiver coil 31. In the following explanation, explanation is omitted about the same processing as the processing in the flowchart of FIG. 7.

When the terminal device 30 is placed on the charging stand 19, the power transmitter coil position setting unit 41 detects the position of the terminal device 30 (step S41).

The foreign object detection unit 50 detects whether the metal foreign object 90 is present between the power transmitter coil 16 and the power receiver coil 31 in a state in which charging is not performed (step S42).

The foreign object detection unit 50 determines whether a foreign object has been detected (step S43). When it is determined that a foreign object has been detected (step S43: Yes), it proceeds to step S56. On the other hand, if it is not determined that a foreign object has been detected (step S43: No), it proceeds to step S44.

When it is determined in step S43 that a foreign object has been detected, the charging state control unit 49 starts charging in a power limited state (step S56). Thereafter, it proceeds to step S57.

On the other hand, when it is not determined in step S43 that a foreign object has been detected, the charging state control unit 49 causes the power transmission instruction unit 42 to start charging the terminal device 30 (step S44).

Subsequently to step S44, the received power efficiency calculation unit 45 calculates the efficiency E(t) (step S45).

The received power efficiency comparison unit 46 determines whether the efficiency E(t) calculated in step S45 is equal to or greater than the threshold Eth (step S46). When it is determined that the efficiency E(t) is equal to or greater than the threshold Eth (step S46: Yes), it proceeds to step S47. On the other hand, when it is not determined that the efficiency E(t) is equal to or greater than the threshold Eth (step S46: No), it proceeds to step S48.

When it is determined in step S46 that the efficiency E(t) is equal to or greater than the threshold Eth, the charging state control unit 49 determines whether the terminal device 30 is in a fully charged state (step S47). When it is determined that the terminal device 30 is in the fully charged state (step S47: Yes), the charging device 10 ends the processing illustrated in FIG. 13. On the other hand, when it is not determined that the terminal device 30 is in the fully charged state (step S47: No), the processing returns to step S45.

On the other hand, when it is not determined in step S46 that the efficiency E(t) is equal to or greater than the threshold Eth, the charging device 10 notifies the terminal device 30 that the charging is to be suspended (step S48). When receiving the notification, in a state in which a communication state with the charging device is maintained, the terminal device 30 operates as in a state of being charged from the charging device 10. Subsequently, the charging state control unit 49 cuts off the power supply to the power transmitter coil 16 (step S49).

The control unit 22 stops the processing illustrated in FIG. 13 for a predetermined time (step S50). By stopping the processing illustrated in FIG. 13 for the predetermined time in step S50, the temperature of the metal foreign object 90 can be lowered in the case where the metal foreign object 90 is present between the power transmitter coil 16 and the power receiver coil 31. It is desirable to stop the processing for, for example, five seconds or more as the predetermined time. For example, the same time may be secured by delaying notification of resumption of charging to the terminal device 30 in step S53.

The power transmitter coil position setting unit 41 detects the position of the terminal device 30 (step S51). The power transmitter coil position setting unit 41 sets the position of the power transmitter coil 16 at a position where there is no positional misalignment from the power receiver coil 31. In the case where the charging device 10 includes the power transmitter coil 16 (the movable coil), the position of which is capable of being changed, the power transmitter coil position setting unit 41 sets the position of the power receiver coil 31 to a position facing the power receiver coil based on the position of the power transmitter coil 16 detected by the power receiver coil position detection circuit 20. Then, the power transmitter coil 16 is moved to the position set by the power transmitter coil position setting unit 41 by the moving mechanism 17. On the other hand, in the case where the charging device 10 includes the plurality of fixed coils as the power transmitter coil 16, the power transmitter coil position setting unit 41 sets the position of the fixed coil having the best received power efficiency as the position of the power transmitter coil 16 while sequentially energizing the fixed coils. Note that, in step S41, various authentications before the start of charging are performed between the charging device 10 and the terminal device 30. However, in this step S51, various authentications are not performed.

Subsequently, the control unit 22 causes the power transmitter coil 16 to transmit very small electric power to the terminal device 30 in order to determine whether the terminal device 30 is placed on the charging stand 19 (step S52). More specifically, the control unit 22 causes the power transmitter coil 16 to transmit very small electric power for communication to the terminal device 30. The terminal device 30 receives this very small electric power to thereby determine that the terminal device 30 is placed on the charging stand 19. Subsequently, the charging device 10 notifies the terminal device 30 that charging is to be resumed (step S53).

The foreign object detection unit 50 detects the metal foreign object 90 between the power transmitter coil 16 and the power receiver coil 31 in a state in which charging is not performed (step S54). Subsequently, the foreign object detection unit 50 determines whether a foreign object has been detected (step S55). When it is determined that a foreign object has been detected (step S55: Yes), it proceeds to step S56. On the other hand, when it is not determined that a foreign object has been detected (step S55: No), the processing returns to step S44 and charging is resumed.

When it is determined in step S55 that a foreign object has been detected, the charging state control unit 49 starts charging in the power limited state (step S56).

The charging state control unit 49 determines whether the terminal device 30 is in the fully charged state (step S57). When it is determined that the terminal device 30 is in the fully charged state (step S57: Yes), the charging device 10 ends the processing illustrated in FIG. 13. On the other hand, when it is not determined that the terminal device 30 is in the fully charged state (step S57: No), the charging device 10 repeats step S57.

Note that, in the operation of FIG. 13, the charging device 10 monitors whether communication continues with the terminal device 30. Then, in the case where it is detected that the communication with the terminal device 30 has been interrupted, it proceeds to step S41 and the charging device 10 performs the processing illustrated in FIG. 13 again.

In the flowchart of FIG. 13, as explained in the flowchart of FIG. 7, the charging device 10 may cause the power transmitter coil position search unit 48 to move the power transmitter coil 16 to search for a position where positional misalignment between the power transmitter coil 16 and the power receiver coil 31 is eliminated.

### (Modification (2) of the embodiment)

A second modification of the charging device 10 is explained with reference to FIG. 14. FIG. 14 is a flowchart illustrating an example of an operation in the second modification of the charging device in the embodiment.

The charging device 10 in the present modification limits transmitted power in the case where the efficiency E(t) is smaller than the threshold Eth and thereafter removes the limitation of the transmitted power when a value of the efficiency E(t) is improved. The charging device 10 in the present modification (2) corresponds to the fifth operation example explained with reference to FIG. 12. That is, when positional misalignment of the terminal device 30 occurs during charging, for example, in the case where the positional misalignment of the terminal device 30 is eliminated by the user moving the terminal device 30 to a correct position, the limitation of the transmitted power can be removed and the terminal device 30 can be charged. In the following explanation, explanation is omitted as appropriate about the same processing as the processing in the flowchart of FIG. 7.

When the terminal device 30 is placed on the charging stand 19, the power transmitter coil position setting unit 41 detects the position of the terminal device 30 (step S61).

The foreign object detection unit 50 detects whether the metal foreign object 90 is present between the power transmitter coil 16 and the power receiver coil 31 in a state in which charging is not performed (step S62).

The foreign object detection unit 50 determines whether a foreign object has been detected (step S63). When it is determined that a foreign object has been detected (step S63: Yes), it proceeds to step S64. On the other hand, when it is not determined that a foreign object has been detected (step S63: No), it proceeds to step S65.

When it is determined in step S63 that a foreign object has been detected, the charging state control unit 49 cuts off the power supply to the power transmitter coil 16 (step S64). Thereafter, the charging device 10 ends the processing illustrated in FIG. 14.

On the other hand, when it is not determined in step S63 that a foreign object has been detected, the charging state control unit 49 causes the power transmission instruction unit 42 to start charging the terminal device 30 (step S65).

Subsequently, the received power efficiency calculation unit 45 calculates the efficiency E(t) (step S68).

The received power efficiency comparison unit 46 determines whether the efficiency E(t) calculated in step S68 is equal to or greater than the threshold Eth (step S69). When it is determined that the efficiency E(t) is equal to or greater than the threshold Eth (step S69: Yes), it proceeds to step S70. On the other hand, when it is not determined that the efficiency E(t) is equal to or greater than the threshold Eth (step S69: No), it proceeds to step S71.

When it is determined in step S69 that the efficiency E(t) is equal to or greater than the threshold Eth, the charging state control unit 49 determines whether the terminal device 30 is in the fully charged state (step S70). When it is determined that the terminal device 30 is in the fully charged state (step S70: Yes), the charging device 10 ends the processing illustrated in FIG. 14. On the other hand, when it is not determined that the terminal device 30 is in the fully charged state (step S70: No), the processing returns to step S68.

When it is not determined in step S69 that the efficiency E(t) is equal to or greater than the threshold Eth, the charging state control unit 49 causes the transmitted power control unit 47 to limit the transmitted power Pout(t) transmitted to the power transmitter coil 16 (step S71).

The received power efficiency calculation unit 45 calculates the efficiency E(t) at the time when the transmitted power Pout(t) is limited and stores the efficiency E(t) in the arithmetic operation result storage unit 22c. Note that the efficiency E(t) stored at this time is represented as efficiency Q (step S72). At this time, the position of the power transmitter coil 16 is also stored in the arithmetic operation result storage unit 22c.

The charging state control unit 49 determines whether the terminal device 30 is in the fully charged state (step S73). When it is determined that the terminal device 30 is in the fully charged state (step S73: Yes), the charging device 10 ends the processing illustrated in FIG. 14. On the other hand, when it is not determined that the terminal device 30 is in the fully charged state (step S73: No), it proceeds to step S74.

When it is not determined in step S73 that the terminal device 30 is in the fully charged state, the received power efficiency calculation unit 45 calculates the efficiency E(t) (step S74). Note that, when the user moves the terminal device 30 during charging, the value of the efficiency E(t) calculated in step S74 fluctuates.

The received power efficiency comparison unit 46 determines whether the efficiency E(t) calculated in step S74 is greater than the efficiency Q (step S75). When it is determined that the efficiency E(t) is greater than the efficiency Q (step S75: Yes), it proceeds to step S76. On the other hand, when it is not determined that the efficiency E(t) is greater than the efficiency Q (step S75: No), the processing returns to step S73.

When it is determined in step S75 that the efficiency E(t) is greater than the efficiency Q, the received power efficiency comparison unit 46 replaces the efficiency Q with the efficiency E(t) calculated in step S74 (step S76). A value of the replaced efficiency Q is stored in the arithmetic operation result storage unit 22c together with the position of the power transmitter coil 16 at that time.

The received power efficiency comparison unit 46 determines whether the efficiency Q is equal to or greater than threshold Eth (step S77). When it is determined that the efficiency Q is equal to or greater than the threshold Eth (step S77: Yes), it proceeds to step S78. On the other hand, when it is not determined that the efficiency Q is equal to or greater than the threshold Eth (step S77: No), the processing returns to step S73.

When it is determined in step S77 that the efficiency Q is equal to or greater than the threshold Eth, the charging state control unit 49 removes the limitation of the transmitted power performed in step S71 (step S78). Thereafter, the processing returns to step S68.

Note that, in the operation illustrated in FIG. 14, the charging device 10 monitors whether communication continues with the terminal device 30. Then, in the case where it is detected that the communication with the terminal device 30 has been interrupted, the processing shifts to step S61 and the processing illustrated in FIG. 14 is performed again.

### (Modification (3) of the embodiment)

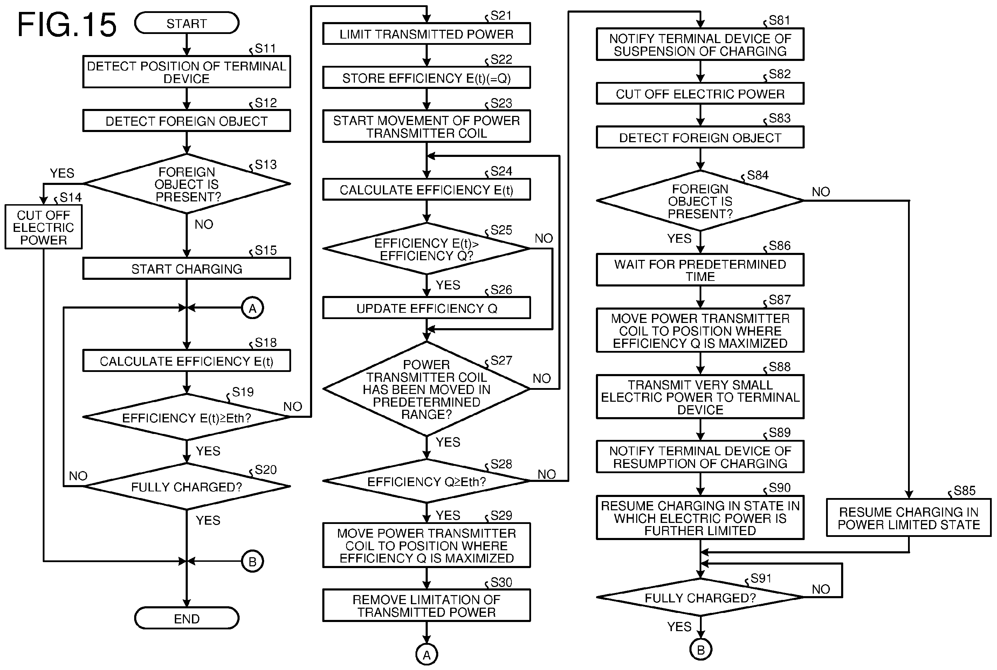

A third modification of the charging device 10 is explained with reference to FIG. 15. FIG. 15 is a flowchart illustrating an example of an operation of the third modification of the charging device in the embodiment. The flowchart illustrated in FIG. 15 is different from the flowchart illustrated in FIG. 7 in processing in steps S81 to S91.

In the case where the efficiency E(t) is not improved even if the power transmitter coil 16 is moved, there is a high possibility that the metal foreign object 90 is present between the power transmitter coil 16 and the power receiver coil 31. Therefore, the charging device 10 in the present modification temporarily stops the charging and, while the charging is temporarily stopped, detects whether the metal foreign object 90 is present. Then, in the case where the metal foreign object 90 has been detected, the charging device 10 resumes the charging in a state in which the transmitted power is further limited. In the following explanation, explanation is omitted about the same processing as the processing in the flowcharts of FIG. 7 and FIG. 13.

When it is not determined in step S28 that the efficiency Q is equal to or greater than the threshold Eth (step S28: No), the charging device 10 in the present modification notifies the terminal device 30 that the charging is to be suspended (step S81). When receiving the notification, in a state in which a communication state with the charging device is maintained, the terminal device 30 operates as in a state of being charged from the charging device 10. Subsequently, the charging state control unit 49 cuts off the power supply to the power transmitter coil 16 (step S82).

The foreign object detection unit 50 detects the metal foreign object 90 between the power transmitter coil 16 and the power receiver coil 31 (step S83). Subsequently, when it is determined that a foreign object has been detected (step S84: Yes), the foreign object detection unit 50 proceeds to step S86. On the other hand, when it is not determined that the foreign object has been detected (step S84: No), the charging state control unit 49 resumes the charging with the transmitted power limited in step S21 (step S85) and it proceeds to step S91.

In step S86, the control unit 22 stops the processing illustrated in FIG. 13 for a predetermined time. By stopping the processing illustrated in FIG. 13 for the predetermined time in step S86, the temperature of the metal foreign object 90 can be lowered between the power transmitter coil 16 and the power receiver coil 31. It is desirable to stop the processing for, for example, five seconds or more as the predetermined time. For example, the same time may be secured by delaying notification of resumption of charging to the terminal device 30 in step S89.

In step S87, the power transmitter coil position search unit 48 moves the power transmitter coil 16 to a position where the efficiency Q is maximized.

In step S88, the control unit 22 causes the power transmitter coil 16 to transmit very small electric power to the terminal device 30 in order to determine whether the terminal device 30 is placed on the charging stand 19. Subsequently, in step S89, the charging device 10 notifies the terminal device 30 that the charging is to be resumed.

In step S90, the charging state control unit 49 further limits the transmitted power than the transmitted power in step S21 and resumes the charging.

In step S91, the charging state control unit 49 determines whether the terminal device 30 is in the fully charged state and repeats the processing in step S91 until it is determined that the terminal device 30 is in the fully charged state.

Note that, in the operation in FIG. 15, the charging device 10 monitors whether communication continues with the terminal device 30. Then, in the case where it is detected that the communication with the terminal device 30 is interrupted, the processing shifts to step S11 and the processing illustrated in FIG. 15 is performed again.

### (Other modifications of the embodiment)

In step S28 of the flowchart of FIG. 7, in the case where it is not determined that the efficiency Q is equal to or greater than the threshold Eth (step S28: No), the charging state control unit 49 may further limit the transmitted power and continue the charging without cutting off the power supply to the power transmitter coil 16.

In the flowchart of FIG. 13, it waits for the predetermined time (step S50) before the position detection (step S51) for the terminal device 30. However, timing when the processing in step S50 is executed is not limited to this and the processing may be executed at any timing between steps S49 and S56.

In the flowchart of FIG. 13, timing when the processing of the very small electric power transmission to the terminal device 30 (step S52) and the notification of the resumption of charging to the terminal device 30 (step S53) is executed is not limited this and the processing may be executed, for example, after the foreign object determination in step S55.

### (Notes)

Techniques explained below are disclosed by the above description of the embodiment and the modifications.

(Technique 1)A charging device in which a terminal device including a power receiver coil that receives wirelessly transmitted power is placed on a charging stand to perform noncontact charging, the charging device including: a power transmitter coil that transmits electric power to the terminal device; a power transmission instruction unit that causes the power transmitter coil to transmit electric power; a transmitted power acquisition unit that acquires magnitude of transmitted power that the power transmission instruction unit causes to be transmitted; a received power acquisition unit that acquires magnitude of received power received by the power receiver coil; an arithmetic operation unit that calculates a ratio of the received power to the transmitted power; and a charging state control unit that limits the transmitted power in a case where the ratio is smaller than a threshold.

With this configuration, in the case where the ratio of the received power to the transmitted power is smaller than the threshold, it is possible to limit the transmitted power and continue the charging. Since the transmitted power is limited, even in the case where a metal foreign object is present between the power transmitter coil and the power receiver coil halfway in the charging, it is possible to continue the charging while suppressing heat generation of the metal foreign object.

(Technique 2) The charging device described in the technique 1, in which, the charging state control unit removes limitation of the transmitted power and causes charging to be continued when the ratio becomes equal to or greater than the threshold in a state in which the transmitted power is limited in a case where the ratio is smaller than the threshold.

With this configuration, in a case where the ratio is improved to be equal to or greater than the threshold, the limitation of the transmitted power can be removed to continue the charging. Therefore, it is possible to reduce a charging time.

(Technique 3) The charging device described in the technique 2, further including a power transmission position search unit (a power transmitter coil position search unit) that searches for a position of the power transmitter coil where the ratio is maximized in the state in which the transmitted power is limited in the case where the ratio is smaller than the threshold, in which the charging state control unit removes the limitation of the power transmitted power and continues charging at the position of the power transmitter coil retrieved by the power transmission position search unit, in a case where the ratio at the position of the power transmitter coil retrieved by the power transmission position search unit is equal to or greater than the threshold.

With this configuration, it is possible to, without stopping charging, correct the position of the power transmitter coil to a position of the power transmitter coil where the ratio is improved to be equal to or greater than the threshold, in other words, a position of the power transmitter coil at which there is no positional misalignment between the power transmitter coil and the power receiver coil and continue the charging. Therefore, it is possible to reduce extension of a charging time and a power loss due to positional misalignment between the power transmitter coil and the power receiver coil.

(Technique 4) The charging device described in the technique 3, in which the charging state control unit stops charging or further limits the transmitted power in a case where the ratio at the position of the power transmitter coil retrieved by the power transmission position search unit is smaller than the threshold.

With this configuration, in a case where the ratio is not improved to be equal to or greater than the threshold and a possibility that a metal foreign object is present between the power transmitter coil and the power receiver coil is high, it is possible to stop the charging or further limit the transmitted power. Therefore, it is possible to suppress heat generation of the metal foreign object and cause the device to more safely operate while avoiding failure of the device.

(Technique 5) The charging device described in the technique 4, in which the charging state control unit further limits the transmitted power and continues charging at the position of the power transmitter coil retrieved by the power transmission position search unit where the ratio is maximized, in the case where the ratio at the position of the power transmitter coil retrieved by the power transmission position search unit is smaller than the threshold.

With this configuration, it is possible to suppress heat generation of the metal foreign object and cause the device to more safely operate while avoiding failure of the device.

(Technique 6) The charging device described in the technique 4, further including a foreign object detection unit that detects whether a metal foreign object is present between the power transmitter coil and the power receiver coil, in which the charging state control unit stops charging or further limits the transmitted power when the metal foreign object is detected by the foreign object detection unit in the case where the ratio at the position of the power transmitter coil retrieved by the power transmission position search unit is smaller than the threshold.

With this configuration, it is possible to suppress heat generation of the metal foreign object and cause the device to more safely operate while avoiding failure of the device.

(Technique 7) The charging device described in the technique 6, in which the foreign object detection unit detects whether the metal foreign object is present between the power transmitter coil and the power receiver coil in a state in which the charging device is not performing charging.

With this configuration, it is possible to perform the detection of the metal foreign object with high accuracy. Since the charging is not performed during the detection of the foreign object, in a case where the metal foreign object is present, it is possible to lower the temperature of the metal foreign object.

(Technique 8) The charging device described in the technique 4, further including a foreign object detection unit that detects whether a metal foreign object is present between the power transmitter coil and the power receiver coil, in which the charging state control unit stops charging in the case where the ratio at the position of the power transmitter coil retrieved by the power transmission position search unit is smaller than the threshold, the foreign object detection unit detects whether the metal foreign object is present in a state in which charging is stopped by the charging state control unit, and the charging state control unit further limits the transmitted power and resumes charging after elapse of a predetermined time, in a case where the metal foreign object is detected by the foreign object detection unit.

With this configuration, it is possible to perform the detection of the metal foreign object with high accuracy. Since the charging is not performed during the detection of the foreign object, in a case where the metal foreign object is present, it is possible to lower the temperature of the metal foreign object.

(Technique 9) The charging device described in the technique 8, in which the charging state control unit resumes the charging at the position of the power transmitter coil retrieved by the power transmission position search unit where the ratio is maximized.

With this configuration, it is possible to reduce a charging time.

(Technique 10) The charging device described in any one of the techniques 1 to 9, in which the power transmitter coil includes a plurality of fixed coils having coil surfaces parallel to a coil surface of the power receiver coil of the terminal device placed on the charging stand.

With this configuration, it is possible to set the position of the fixed coil having the best ratio of the received power to the transmitted power (the efficiency E(t)) as the position of the power transmitter coil and cause the fixed coil to transmit electric power to the terminal device to continue the charging.

(Technique 11) The charging device according to any one of the techniques 1 to 9, in which the power transmitter coil is a movable coil, a position of a coil surface of which is capable of being changed on a plane parallel to a coil surface of the power receiver coil of the terminal device placed on the charging stand.

With this configuration, it is possible to move the position of the power transmitter coil to a position where there is no positional misalignment from the power receiver coil and continue the charging.

(Technique 12) A charging device in which a terminal device including a power receiver coil that receives wirelessly transmitted power is placed on a charging stand to perform noncontact charging, the charging device including: a power transmitter coil that transmits electric power to the terminal device; a power transmission instruction unit that causes the power transmitter coil to transmit electric power; a transmitted power acquisition unit that acquires magnitude of transmitted power that the power transmission instruction unit causes to be transmitted; a received power acquisition unit that acquires magnitude of received power received by the power receiver coil; an arithmetic operation unit that calculates a ratio of the received power to the transmitted power; and a charging state control unit that stops charging in a case where the ratio is smaller than a threshold and resumes charging after elapse of a predetermined time.

With this configuration, in the case where the ratio of the received power to the transmitted power is smaller than the threshold, the charging is once stopped and is resumed after the elapse of the predetermined time. Therefore, in a case where the metal foreign object 90 is present between the power transmitter coil and the power receiver coil, it is possible to lower the temperature of the metal foreign object and continue the charging. Therefore, it is possible to continue the charging while suppressing heat generation of the metal foreign object.

(Technique 13) The charging device described in the technique 12, further including a foreign object detection unit that detects whether a metal foreign object is present between the power transmitter coil and the power receiver coil, in which the foreign object detection unit detects whether the metal foreign object is present between the power transmitter coil and the power receiver coil when transmission of electric power to the terminal device is stopped in the case where the ratio is smaller than the threshold, and the charging state control unit stops charging in the case where the ratio is smaller than the threshold, and limits the transmitted power and resumes charging when the foreign object detection unit detects the metal foreign object.

With this configuration, when the metal foreign object is detected, the transmitted power is limited and the charging is resumed. Therefore, it is possible to continue the charging while further suppressing heat generation of the metal foreign object. Since the heat generation of the metal foreign object is further suppressed, it is possible to avoid failure of the device and cause the device to safely operate.

(Technique 14) The charging device described in the technique 12, further including a power transmitter coil position setting unit that sets a position of the power transmitter coil according to a placing position of the terminal device, in which the power transmitter coil transmits electric power to the terminal device at a position set by the power transmitter coil position setting unit, the power transmitter coil position setting unit sets the position of the power transmitter coil when the charging is stopped in the case where the ratio is smaller than the threshold, and the charging state control unit stops charging in the case where the ratio is smaller than the threshold, and resumes the charging at the position of the power transmitter coil set by the power transmitter coil position setting unit.

With this configuration, it is possible to correct the position of the power transmitter coil to a position where there is no positional misalignment between the power transmitter coil and the power receiver coil and continue the charging. Therefore, it is possible to reduce extension of a charging time and a power loss due to positional misalignment between the power transmitter coil and the power receiver coil.

(Technique 15) The charging device described in the technique 14, further including a foreign object detection unit that detects whether a metal foreign object is present between the power transmitter coil and the power receiver coil, in which the foreign object detection unit detects whether the metal foreign object is present between the power transmitter coil and the power receiver coil when the charging is stopped in the case where the ratio is smaller than the threshold, and the charging state control unit stops the charging in the case where the ratio is smaller than the threshold, and limits the transmitted power and resumes the charging when the metal foreign object is detected by the foreign object detection unit.

With this configuration, when the metal foreign object is detected, the transmitted power is limited and the charging is resumed. Therefore, it is possible to continue the charging while further suppressing heat generation of the metal foreign object. Since the heat generation of the metal foreign object is further suppressed, it is possible to avoid failure of the device and cause the device to safely operate.

(Technique 16) The charging device described in any one of the techniques 12 to 15, in which, in the case where the ratio is smaller than the threshold, the charging device makes, to the terminal device, a notification that charging is to be stopped, the charging state control unit, in the case where the ratio is smaller than the threshold, stops the charging after the notification to the terminal device is made, makes, to the terminal device, a notification that charging is to be resumed before transmission of electric power to the terminal device is resumed, and resumes the charging after the notification to the terminal device is made.

(Technique 17) The charging device described in any one of the techniques 12 to 16, in which a communication state with the terminal device is maintained in a state in which the charging is stopped.

With this configuration, since the charging device and the terminal device maintain the communication state, it is unnecessary to perform various authentication procedures between the charging device and the terminal device before the charging is resumed. For example, while the charging is stopped, the terminal device can operate as in a state in which the terminal device is receiving the charging from the charging device. Since it is unnecessary to perform the various authentication procedures, it is possible to quickly resume the charging after the charging resumption by the charging device is determined.

(Technique 18) The charging device described in any one of the techniques 12 to 17, in which, after transmission of electric power to the terminal device is stopped, the power transmitter coil transmits electric power for determining whether the terminal device is placed on the charging stand.

With this configuration, by receiving the electric power, the terminal device can determine that the terminal device is placed on the charging stand. Then, the terminal device can continue the same operation as the operation in the state in which the terminal device is receiving the charging from the charging device and can quickly resume the charging after the charging resumption is determined by the charging device.

(Technique 19) The charging device described in any one of the techniques 12 to 18, in which the power transmitter coil includes a plurality of fixed coils having coil surfaces parallel to a coil surface of the power receiver coil of the terminal device placed on the charging stand.

With this configuration, it is possible to set the position of the fixed coil having the best ratio of the received power to the transmitted power (the efficiency E(t)) as the position of the power transmitter coil and transmit the electric power from the fixed coil to the terminal device to perform the charging.

(Technique 20) The charging device described in any one of the techniques 12 to 18, in which the power transmitter coil is a movable coil, a position of a coil surface of which is capable of being changed on a plane parallel to a coil surface of the power receiver coil of the terminal device placed on the charging stand.

With this configuration, it is possible to move the position of the power transmitter coil to a position where there is no positional misalignment with the power receiver coil and perform the charging.

Although the embodiment of the present invention is explained above, the embodiment explained above is presented as an example and is not intended to limit the scope of the present invention. This novel embodiment can be implemented in other various forms. Various omissions, substitutions, and changes can be made without departing from the gist of the invention. This embodiment is included in the scope and the gist of the invention and is included in the inventions described in the claims and a scope of equivalents of the inventions.

### EXPLANATIONS OF LETTERS OR NUMERALS

10 CHARGING DEVICE
11 DC POWER SUPPLY
12 DC-DC CONVERTER
13 BRIDGE CIRCUIT
14 VOLTAGE DETECTION CIRCUIT
15 CURRENT DETECTION CIRCUIT
16 POWER TRANSMITTER COIL (MOVABLE COIL)
17 MOVING MECHANISM
18 POSITION DETECTION CONTROLLER
19 CHARGING STAND
20 POWER RECEIVER COIL POSITION DETECTION CIRCUIT
21 FOREIGN OBJECT DETECTION CIRCUIT
22 CONTROL UNIT
22a ARITHMETIC OPERATION UNIT
22b ARITHMETIC OPERATION RESULT COMPARISON UNIT
22c ARITHMETIC OPERATION RESULT STORAGE UNIT
22d POWER TRANSMITTER COIL POSITION CONTROL UNIT
30 TERMINAL DEVICE
31 POWER RECEIVER COIL
32 SERVOMOTOR
32a X-AXIS SERVOMOTOR
32b Y-AXIS SERVOMOTOR
33a X-AXIS SCREW ROD
33b Y-AXIS SCREW ROD
34a X-AXIS NUT MEMBER
34b Y-AXIS NUT MEMBER
35 BELT
36 GUIDE ROD
37 CORE
38 POSITION CONTROL CIRCUIT
39 POWER SUPPLY CIRCUIT
40 HOUSING
41 POWER TRANSMITTER COIL POSITION SETTING UNIT
42 POWER TRANSMISSION INSTRUCTION UNIT
43 TRANSMITTED POWER ACQUISITION UNIT
44 RECEIVED POWER ACQUISITION UNIT
45 RECEIVED POWER EFFICIENCY CALCULATION UNIT (ARITHMETIC OPERATION UNIT)
46 RECEIVED POWER EFFICIENCY COMPARISON UNIT
47 TRANSMITTED POWER CONTROL UNIT
48 POWER TRANSMITTER COIL POSITION SEARCH UNIT (POWER TRANSMISSION POSITION SEARCH UNIT)
49 CHARGING STATE CONTROL UNIT
50 FOREIGN OBJECT DETECTION UNIT
90 METAL FOREIGN OBJECT
C CAPACITOR
E(t), Q EFFICIENCY
Eth THRESHOLD
Pout(t) TRANSMITTED POWER
Rp(t) RECEIVED POWER
t TIME
ΔW POWER DIFFERENCE

## Claims

1. A charging device in which a terminal device including a power receiver coil that receives wirelessly transmitted power is placed on a charging stand to perform noncontact charging, the charging device comprising:
a power transmitter coil that transmits electric power to the terminal device;
a power transmission instruction unit that causes the power transmitter coil to transmit electric power;
a transmitted power acquisition unit that acquires magnitude of transmitted power that the power transmission instruction unit causes to be transmitted;
a received power acquisition unit that acquires magnitude of received power received by the power receiver coil;
an arithmetic operation unit that calculates a ratio of the received power to the transmitted power; and
a charging state control unit that limits the transmitted power in a case where the ratio is smaller than a threshold.

2. The charging device according to claim 1, wherein
the charging state control unit removes limitation of the transmitted power and causes charging to be continued when the ratio becomes equal to or greater than the threshold in a state in which the transmitted power is limited in a case where the ratio is smaller than the threshold.

3. The charging device according to claim 2, further comprising a power transmission position search unit that searches for a position of the power transmitter coil where the ratio is maximized in the state in which the transmitted power is limited in the case where the ratio is smaller than the threshold, wherein
the charging state control unit removes the limitation of the power transmitted power and continues charging at the position of the power transmitter coil retrieved by the power transmission position search unit, in a case where the ratio at the position of the power transmitter coil retrieved by the power transmission position search unit is equal to or greater than the threshold.

4. The charging device according to claim 3, wherein
the charging state control unit stops charging or further limits the transmitted power in a case where the ratio at the position of the power transmitter coil retrieved by the power transmission position search unit is smaller than the threshold.

5. The charging device according to claim 4, wherein
the charging state control unit further limits the transmitted power and continues charging at the position of the power transmitter coil retrieved by the power transmission position search unit where the ratio is maximized, in the case where the ratio at the position of the power transmitter coil retrieved by the power transmission position search unit is smaller than the threshold.

6. The charging device according to claim 4, further comprising a foreign object detection unit that detects whether a metal foreign object is present between the power transmitter coil and the power receiver coil, wherein
the charging state control unit stops charging or further limits the transmitted power when the metal foreign object is detected by the foreign object detection unit in the case where the ratio at the position of the power transmitter coil retrieved by the power transmission position search unit is smaller than the threshold.

7. The charging device according to claim 6, wherein
the foreign object detection unit detects whether the metal foreign object is present between the power transmitter coil and the power receiver coil in a state in which the charging device is not performing charging.

8. The charging device according to claim 4, further comprising a foreign object detection unit that detects whether a metal foreign object is present between the power transmitter coil and the power receiver coil, wherein
the charging state control unit stops charging in the case where the ratio at the position of the power transmitter coil retrieved by the power transmission position search unit is smaller than the threshold,
the foreign object detection unit detects whether the metal foreign object is present in a state in which charging is stopped by the charging state control unit, and
the charging state control unit further limits the transmitted power and resumes charging after elapse of a predetermined time, in a case where the metal foreign object is detected by the foreign object detection unit.

9. The charging device according to claim 8, wherein
the charging state control unit resumes the charging at the position of the power transmitter coil retrieved by the power transmission position search unit where the ratio is maximized.

10. The charging device according to any one of claims 1 to 9, wherein
the power transmitter coil includes a plurality of fixed coils having coil surfaces parallel to a coil surface of the power receiver coil of the terminal device placed on the charging stand.

11. The charging device according to any one of claims 1 to 9, wherein
the power transmitter coil is a movable coil, a position of a coil surface of which is capable of being changed on a plane parallel to a coil surface of the power receiver coil of the terminal device placed on the charging stand.

12. A charging device in which a terminal device including a power receiver coil that receives wirelessly transmitted power is placed on a charging stand to perform noncontact charging, the charging device comprising:
a power transmitter coil that transmits electric power to the terminal device;
a power transmission instruction unit that causes the power transmitter coil to transmit electric power;
a transmitted power acquisition unit that acquires magnitude of transmitted power that the power transmission instruction unit causes to be transmitted;
a received power acquisition unit that acquires magnitude of received power received by the power receiver coil;
an arithmetic operation unit that calculates a ratio of the received power to the transmitted power; and
a charging state control unit that stops charging in a case where the ratio is smaller than a threshold and resumes charging after elapse of a predetermined time.

13. The charging device according to claim 12, further comprising a foreign object detection unit that detects whether a metal foreign object is present between the power transmitter coil and the power receiver coil, wherein
the foreign object detection unit detects whether the metal foreign object is present between the power transmitter coil and the power receiver coil when transmission of electric power to the terminal device is stopped in the case where the ratio is smaller than the threshold, and
the charging state control unit stops charging in the case where the ratio is smaller than the threshold, and limits the transmitted power and resumes charging when the foreign object detection unit detects the metal foreign object.

14. The charging device according to claim 12, further comprising a power transmitter coil position setting unit that sets a position of the power transmitter coil according to a placing position of the terminal device, wherein
the power transmitter coil transmits electric power to the terminal device at the position set by the power transmitter coil position setting unit,
the power transmitter coil position setting unit sets the position of the power transmitter coil when the charging is stopped in the case where the ratio is smaller than the threshold, and
the charging state control unit stops charging in the case where the ratio is smaller than the threshold, and resumes the charging at the position of the power transmitter coil set by the power transmitter coil position setting unit.

15. The charging device according to claim 14, further comprising a foreign object detection unit that detects whether a metal foreign object is present between the power transmitter coil and the power receiver coil, wherein
the foreign object detection unit detects whether the metal foreign object is present between the power transmitter coil and the power receiver coil when the charging is stopped in the case where the ratio is smaller than the threshold, and
the charging state control unit stops the charging in the case where the ratio is smaller than the threshold, and limits the transmitted power and resumes the charging when the metal foreign object is detected by the foreign object detection unit.

16. The charging device according to any one of claims 12 to 15, wherein
in the case where the ratio is smaller than the threshold, the charging device makes, to the terminal device, a notification that charging is to be stopped,
the charging state control unit, in the case where the ratio is smaller than the threshold,
stops the charging after the notification to the terminal device is made,
makes, to the terminal device, a notification that charging is to be resumed before transmission of electric power to the terminal device is resumed, and resumes the charging after the notification to the terminal device is made.

17. The charging device according to any one of claims 12 to 15, wherein
a communication state with the terminal device is maintained in a state in which the charging is stopped.

18. The charging device according to any one of claims 12 to 15, wherein
after transmission of electric power to the terminal device is stopped, the power transmitter coil transmits electric power for determining whether the terminal device is placed on the charging stand.

19. The charging device according to any one of claims 12 to 15, wherein
the power transmitter coil includes a plurality of fixed coils having coil surfaces parallel to a coil surface of the power receiver coil of the terminal device placed on the charging stand.

20. The charging device according to any one of claims 12 to 15, wherein
the power transmitter coil is a movable coil, a position of a coil surface of which is capable of being changed on a plane parallel to a coil surface of the power receiver coil of the terminal device placed on the charging stand.
